# EUROPEAN PATENT APPLICATION

(11) **EP 4 645 841 A1**
(43) Date of publication of application: **05.11.2025**
(21) Application number: 24174205.5
(22) Date of filing: 03.05.2024
(51) Int. Cl.: H04M 1/72409, H04M 1/18

(54) **CONTROLLABLE TACTICAL COMMUNICATION SYSTEM AND CONTROL METHOD THEREOF**

(71) Applicant: INVISIO A/S, 2650 Hvidovre (DK)
(72) Inventor: DAHL, Lukas Amtoft, 2650 Hvidovre (DK); DAHL, Jonas Burup, 2650 Hvidovre (DK); JAHN, Mike Hemmje, 2650 Hvidovre (DK); TRANEGAARD, Jacob, 2650 Hvidovre (DK); LUSTRUP, Peter, 2650 Hvidovre (DK)
(74) Representative: Guardian IP Consulting I/S

(57) **Abstract**

The present invention relates to a controllable tactical communication system (201) (and a corresponding method) to be used in a demanding environment, the controllable tactical communication system (201) comprising: a communication hub (101, 203) comprising a number, e.g. a plurality, of first connectors (103f-i), each first connector (103f-i) configured to connect to a communication device (207a-d), and comprising a number, e.g. a plurality, of second connectors (103a-e), each second connector (103a-e) configured to connect to a personal user device (3, 5) of a set of personal communication equipment (13, 209a-c), one or more communication devices (207a-d), each configured to receive and transmit a communication signal from and/or to a remote source and each being connected to a respective first connector (103f-i) of the communication hub (101, 203), one or more personal user devices (3, 5) of respective sets of personal communication equipment (209a-c), each set of personal communication equipment (209a-c) representing or being associated with a respective specific user (1, 209a-c) and each personal user devices (3, 5) being connected to a respective second connector (103a-d) of the communication hub (101, 203), and one or more processing elements and/or devices (113, 227, 213, 221) configured to obtain first data representing or associated with the communication device(s) (207a-d) that presently is connected to the communication hub (101, 203), and/or obtain second data representing or associated with the specific user(s) (1, 209a-c) represented or being associated with personal user device(s) (3, 5) that presently is connected to the communication hub (101, 203), wherein the one or more processing elements and/or devices (113, 227, 213, 221) is/are further configured to generate and present one or more graphical user interface elements in response to the first and/or second data.

## Description

### TECHNICAL FIELD

The present invention relates in one aspect to controllable tactical communication system to be used in a demanding environment. In a yet further aspect, the invention relates to a method of controlling a tactical communication system to be used in a demanding environment.

### BACKGROUND

Intercom systems are commonly used in military and public safety operations for communication within vehicles, between individuals, and/or between different units. These systems facilitate clear and secure communication, allowing for coordination and information sharing in various operational scenarios. Intercom systems used in military and public safety applications are typically designed to withstand harsh environmental conditions and may include features such as encryption to ensure the security of transmitted information. Typically such intercom system are connected with one or more connection devices such as a plurality of individual users (or rather their equipment), and VHF (Very High Frequency) Radios, used for line-of-sight communication between ground troops, vehicles, and aircraft, UHF (Ultra High Frequency) Radios used for short-range tactical communication, especially in urban and for-ested environments, HF (High Frequency) Radios suitable for long-range communication over hundreds or even thousands of kilometers, making them useful for communicating over long distances or in remote areas, SATCOM (Satellite Communication) Radios to enable communication over long distances, often providing global coverage and Tactical Data Links such as Link 16 (which is a military tactical data link network used by NATO members and other nations) enabling secure digital communication and information sharing between various platforms, including aircraft, ground vehicles, and command centers.

The intercom system may thereby enable communication between a wide range of communication platforms for the connected users. Today, communication links and accesses between connected users and communication channels are managed via pre-programmed user or communication device configurations stored in the intercom system or at (a device of) the individual user. This provides a challenge in modern constellations, where users may require to be temporarily connected to an intercom prior or during a mission. This poses a challenge as all user configurations and accesses may not be pre-programmed as configurations may not be known in advance and in some situations perhaps cannot even be anticipated.

Clear and undistorted communication is vital for military and public safety professionals operating in extreme and demanding environments. Clear and undistorted communication is essential for soldiers, police, rescue personnel, fire fighters and other task forces as it ensures coordination among team members and enhances safety and security by reducing misunderstandings. Rapid and swift communication facilitates quick decision-making and response to changing situations. The ability to share observations and intelligence in real-time between relevant groups or individuals relies on clear and undistorted communication, enhances mission success, and maximizes safety. Being able transmit or receive the correct voice communication in a complex communication setup, independent of audio communication types and under stressful circumstances can make the difference between life and death.

The ability to receive or transmit field intelligence in essential to coordinate any special operation successfully. Targeted communication between units, individuals or central commands is essential and can make the difference between success of complete failure. The need for communication is high and the complexity of different operations are increasing as multiple different groups or individuals may join forces and work closely together to accomplish a mission, such as police, rescue personal and firefighters may collaborate at an emergency site or different special forces or marine troopers from different countries or organizations collaboration in a joint coalition force. Such constellations require complex communication steps containing multiple communication devices, channels etc. making unambiguity communication flow challenging. Multiple communication channels may be available, with different levels of confidentiality in relation to the message classification level, making administration and control of communication links challenging.

### SUMMARY

One object of the present invention is to overcome at least some of the above-mentioned and/or other disadvantages (at least to an extent), or at least to provide an alternative to existing solutions.

According to a first aspect, disclosed herein are embodiments of a system according to independent claim 1 with advantageous embodiments as defined by the dependent claims and disclosed herein.

According to the above aspect, disclosed herein are embodiments of a controllable tactical communication system to be used in a demanding environment as disclosed herein.

More specifically, the controllable tactical communication system to be used in a demanding environment comprises
- a communication hub comprising
   ∘ a (first) number, e.g. a plurality, of first connectors (i.e. of a first type), each first connector configured to (e.g. or preferably releasably and/or e.g. directly or indirectly and/or wirelessly) connect to a communication device, and
   ∘ comprising a (second) number, e.g. a plurality, of second connectors (i.e. of a second type), each second connector configured to (e.g. or preferably releasably and/or e.g. directly or indirectly and/or wirelessly) connect to a personal user device of a set of personal communication equipment,
- one or more (a third number equal to or less than the first number) communication devices, each configured to receive and transmit a communication signal from and/or to a remote source and each being (e.g. or preferably detachably) connected to a respective first connector of the communication hub,
- one or more (i.e. a fourth number equal to or less than the second number) personal user devices of respective sets of personal communication equipment, each set of personal communication equipment representing or being associated with a respective specific user and each personal user devices being (e.g. or preferably detachably) connected to a respective second connector of the communication hub, and
- one or more processing elements and/or devices configured to
   ∘ obtain first data representing or associated with the communication device(s) that presently is connected to the communication hub, and/or
   ∘ obtain second data representing or associated with the specific user(s) represented or being associated with personal user device(s) that presently is connected to the communication hub,
wherein the one or more processing elements and/or devices is/are further configured to generate and present one or more graphical user interface elements in response to the first and/or second data.

In this way, a solution is presented that simplify the control and configuration of a tactical communication system to be used in demanding environments. The solutions consist of (at least in some embodiments) a communication hub connected to a plurality of communication devices and a plurality of users, wearing a rugged hearing protection headset, and one or more processors operably connected to the communication hub configured to control and monitor the communication links and flows simultaneously in real-time on a display device. The system may additionally provide the option to re-configure access and communication links on-the-fly providing a flexible system which may be adapted to specific requirements for military and public safety personnel.

Furthermore, a communication system is provided that enables and/or provides real-time monitoring of communication activity and dynamic control of communication paths and talk groups/channels between users and external radio communication in a dynamically configurable communication system.

In particular a communication system is provided that enables/provides an 'on-the-fly' dynamic configuration of a highly individualised or at least highly individualisable communication system and control thereof.

The ability to provide a clear dynamic real-time communication traffic overview on both a communication device level and user level is particular advantageously in complex and dynamic communication networks in demanding environments involving a plurality of communication devices and a plurality of users where clear and undistorted communication between the correct people may be crucial.

Other effects and advantages of the invention and embodiments thereof are disclosed in relation to the Figures.

In some embodiments, the first type and the second type (of connectors) are the same. In other embodiments, first type and the second type (of connectors) are the different.

In some embodiments, the one or more graphical user interface elements comprising
- a main indicator for each respective presently connected communication device (or at least some of them), the main indicator(s) (e.g. or preferably graphically) indicating a current actual status of communication of the respective communication device, and/or
- a sub-indicator for each user (or at least some of them), the sub-indicator(s) (e.g. or preferably graphically) indicating current actual status of communication of the respective personal user device(s) representing or being associated with the respective user.

In some embodiments, the main indicator(s) is/are generated in response to the first data and/or the sub-indicator(s) is/are generated in response to the second data.

In some embodiments,
- the current actual status of communication of the respective communication device(s) comprises a transmit indicator when the current actual status of communication of the respective communication device(s) comprises transmitting a communication signal and a receive indicator when the current actual status of communication of the respective communication device(s) comprises receiving a communication signal, and/or
- the current actual status of communication of the respective personal user device(s) comprises a transmit sub-indicator when the current actual status of communication of the respective personal user device(s) comprises transmitting a communication signal and a receive sub-indicator when the current actual status of communication of the respective personal user device(s) comprises receiving a communication signal.

In some embodiments, the one or more processing elements and/or devices is/are further configured to control communication of the tactical communication system by
- generating and presenting one or more graphical user interface elements comprising the communication device(s) according to the first data;
- generating and presenting one or more graphical user interface elements comprising the specific user(s) according to the second data;
- generating and presenting one or more graphical user interface elements comprising a user selectable selection element for each combination/pair, or a subset thereof, of communication device and specific user,
- registering which user selectable selection elements a user selects resulting in a combination/pair set of selected and registered communication device and specific user combinations/pairs, and only allow communication in the controllable tactical communication system of the communication device(s) and specific user(s) according to the resulting combination/pair set.

In some embodiments,
- the communication device(s) and the personal user device(s) that are connected to the communication hub respectively is connected via a respective connector, where each connector, or at least one or some thereof, comprises an embedded memory in the respective connector or a in a cable attached thereto, where the respective embedded memory comprises data representing configuration settings for the device that connector is for, and
- the one or more processing elements and/or devices is/are configured to only, at least initially, generate and present selection elements for communication device and specific user combination(s)/pair(s) as allowed by or in accordance to the data representing configuration settings of the connected devices.

In some embodiments, the one or more processing elements and/or devices is/are further configured to
- generate and present a graphical user interface element for each connected communication device of the resulting combination/pair set, the respective graphical user interface element displaying information or data of
   ∘ the communication device in question,
   ∘ each specific user that, according to the resulting combination/pair set, has been selected to be allowed to communicate with or via the communication device in question resulting in a set of allowed specific user(s), and
   ∘ a main indicator for the communication device in question and/or a sub-indicator for each specific user of the set of allowed specific user(s).

In some embodiments, the one or more processing elements and/or devices is/are further configured to
- generate and present one or more graphical user interface elements comprising a user selectable security selection element for each connected communication device (e.g. or preferably according to the first data), and
- registering which user selectable security selection element a user selects or chooses and set a security level accordingly, e.g. including setting an encryption level, for the communication device in question,
wherein the controllable tactical communication system is configured to allow and/or disallow one or more predetermined functionalities involving the communication device in the controllable tactical communication system in response to the set security level.

In some embodiments, the one or more processing elements and/or devices is/are further configured to
- generate and present one or more graphical user interface elements comprising a user selectable relay selection element for each connected communication device (e.g. or preferably according to the first data), and
- registering which user selectable relay selection element a user selects or chooses and set a relay functionality for the communication device (207a-d) in question accordingly.

In some embodiments,
- the first data is dynamically updated accordingly when a communication device is disconnected from communication hub and/or
- the second data is dynamically updated when a personal user device(s) is disconnected from communication hub by removing the specific user, represented or being associated with removed personal user device, from the second data.

In some embodiments, the communication hub
- is portable and/or wearable (e.g. by a human user e.g. in a backpack or similar), or
- is fixed or installed (e.g. removably) in a vehicle or the like.

In some embodiments,
- the controllable tactical communication system further comprises a, e.g. or preferably portable and/or wearable, processing device e.g. a (rugged) tablet or the like, and
- the communication hub comprises at least one third connector (i.e. of a third type) configured to transmit and/or receive a data signal, wherein the processing device is connected e.g. or preferably releasably and/or e.g. directly or indirectly and/or wirelessly) to the communication hub via the third connector,
wherein the processing device comprises a display and is configured to
- generate and present the one or more graphical user interface elements, and
- receive input from a user operating the processing device.

In some embodiments,
- the set of personal communication equipment of a personal user device comprises a hearing protection headset and one or more of: a push-to-talk (PTT) control unit, a hearing protection device, one or more communication devices, one or more radios, a radio of a first type, a radio of a second type, one or more end-user-devices (EUD),
- at least one, some, or all of the connected communication device(s) and/or the connected personal user device(s) are releasable or detachable connected with the communication hub,
- at least one, some, or all of the connected communication device(s) and/or the connected personal user device(s) are wirelessly connected with the communication hub, and/or
- the communication hub is powered by an off-grid power supply (e.g. in a vehicle like car, boat, plane, etc. and/or from a battery generator, solar panel(s), etc.).

In some embodiments,
- the controllable tactical communication system further comprises one or more auxiliary devices,
- the second data further represent one or more of the auxiliary devices that presently is connected to the communication hub via a respective second connector of the communication hub, and
- the one or more processing elements and/or devices is/are further configured to
- generate and present one or more graphical user interface elements in response to the first and/or second data, the one or more graphical user interface elements comprising
   ∘ a further sub-indicator for each connected auxiliary devices (or at least some of them), the further sub-indicator(s) (e.g. or preferably graphically) indicating current actual status of communication of the respective connected auxiliary device(s).

In some embodiments,
- the personal communication equipment is rugged,
- the personal communication equipment is submersible in water up to at least 1 meter and are dust and sand-proof, e.g. according to a suitable specific ingress protection (IP) rating,
- the hearing protection headset is configured to provide at least 20 dB SNR or at least 24 dB SNR hearing protection in a passive and/or active manner, and/or
- the hearing protection headset is a dual-sided circumaural headset.

A second aspect of the invention relates to method of controlling a controllable tactical communication system. According to the second aspect, a method of controlling a controllable tactical communication system is provided, the method comprising:
- (e.g. or preferably detachably) connecting one or more (i.e. a third number; equal or less than the first number) communication devices, each configured to receive and transmit a communication signal from and/or to a remote source, to a respective first connector of a communication hub,
- (e.g. or preferably detachably) connecting one or more (i.e. a fourth number; equal or less than the second number) personal user devices of respective sets of personal communication equipment to a respective second connector of the communication hub, each set of personal communication equipment representing or being associated with a respective specific user, and
- obtaining, by one or more processing elements and/or devices,
   ∘ first data, the first data representing or associated with the communication device(s) that presently is connected to the communication hub, and/or
   ∘ second data, the second data representing or associated with the specific user(s) represented or being associated with personal user device(s) that presently is connected to the communication hub,
wherein the method further
- generates and presents, by the one or more processing elements and/or devices, one or more graphical user interface elements in response to the first and/or second data.

In some embodiments, the communication hub comprises
∘ a (first) number, e.g. a plurality, of first connectors (i.e. of a first type), each first connector configured to (e.g. or preferably releasably and/or e.g. directly or indirectly and/or wirelessly) connect to a communication device, and
∘ comprising a (second) number, e.g. a plurality, of second connectors (i.e. of a second type), each second connector configured to (e.g. or preferably releasably and/or e.g. directly or indirectly and/or wirelessly) connect to a personal user device of a set of personal communication equipment.

Further embodiments of the method corresponds to further embodiments of the system according to the first aspect and have the same advantages for the same reasons.

### BRIEF DESCRIPTION OF THE DRAWINGS

Embodiments of the invention will now be described in more detail. Various embodiments of the system and/or the method will be described in connection with the appended drawings, in which:
FIG. 1A schematically illustrates an example of a user wearing personal communication equipment configured to be worn by a person in communication with other connected units;
FIG. 1B schematically illustrates an example of a PTT control unit;
FIG. 2 schematically illustrates an example of a communication hub device or system comprising a plurality of interface connections for connection to one or more users via their personal communication equipment and/or one or more communication devices;
FIG. 3 schematically illustrates an example of a system configured to dynamically control a configuration of a tactical communication system to be used in demanding environments;
FIGS. 4A-D schematically illustrate examples of different digital GUI element layouts containing one or more interactive operating elements for a user to control a communication system as disclosed herein;
Fig. 4E schematically illustrates an example of a real-time snapshot of at least a part of a rendered GUI of controlled communication in a communication system as disclosed herein;
Fig. 5A schematically illustrates an example of a GUI showing a setting configuration menu;
FIG. 5B schematically illustrates an example of a GUI showing a Security level category manager for controlling and managing security levels;
FIG. 5C schematically illustrates an example of a GUI showing a communication relationship manager controlling a relationship between communication devices based on the security levels categories;
FIG. 5D schematically illustrates an example of a GUI showing two GUI communication traffic overview elements in accordance with an established communication device transmission relationship as illustrated in Fig. 5C;
FIG. 6 schematically illustrates an example of a GUI showing a communication traffic overview of a preliminary command central generated based on a system configuration, showing four GUI communication traffic overview elements; and
FIGS. 7A-C schematically illustrate examples of different states of a digital GUI showing how the GUI dynamically changes as different types of communication devices are removed/disconnected.

### DETAILED DESCRIPTION

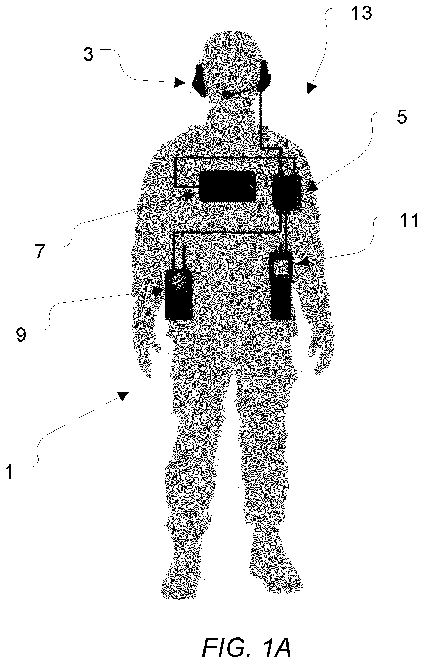

FIG. 1A schematically illustrates an example of a user wearing personal communication equipment configured to be worn by a person in communication with other connected units.

Illustrated is a user 1 wearing wearable personal communication equipment (together designated 13 as one). In the illustrated example, the personal communication equipment comprises one or more devices for tactical communication and a hearing protection device 3. In the illustrated example, the user 1 is in a so-called dismounted configuration that refers to a situation where a user 1 may maintain one or more communication links with one or more remote parts (system(s) and/or other user(s)) without a physical link, such as a cable etc. Being dismounted enables the user 1 to freely move around while being able to maintain communication.

The personal communication equipment 13 comprises a hearing protection device 3, e.g. or preferably in the form of a hearing protection headset, and one or more PTT control units 5 (only one PTT control unit 5 in the illustrated example). Additionally, the user 1 may carry and use one or more additional electronic devices, such as an End-User-Device (EUD) 7 and one or more communication devices 9, 11. In the illustrated example, the user 1 is wearing a hearing protection headset 3, a PTT control unit 5 (also sometimes referred to a PTT control hub or box or simply control box), an EUD 7, and two radios 9, 11 of different types or of different settings, where the headset 3, the EUD 7, and the two radios 9, 11 respectively is connected to the PTT control unit 5 via respective cables. Alternatively, one or more of the cabled connections may be replaced by suitable wireless connections. As disclosed herein, at least one device of the user's personal equipment 13 ((i.e. or e.g.) the hearing protection headset 3 and/or the PTT control unit 5) may be connected to an intercom system/communication hub via a wired cable link or short range wireless link.

### Headset

The headset 3 may e.g. be a rugged hearing protection headset 3 to be used for tactical communication in demanding environments configured to be worn by a military or public safety professional. Such a headset 3 may e.g. be a circumaural headset, submersible single sided headset, dual sided headset with and without active hearing protection, etc. Rugged should be understood herein as being configured to be submersible in water up to at least 1 meter, and be dust and sand-proof, e.g. according to a suitable specific ingress protection (IP) rating. Hearing protection headset should be understood as a headset that is capable of providing at least 20 dB SNR hearing protection in a passive and/or active manner. Different methods may be implemented of obtaining hearing protection in the headset 3 including "automatic noise reduction" that utilises additional hearthru microphone(s) and digital signal processing to limit the overall amplitude of ambient sounds while still allowing them to be heard by the user thereby providing situational awareness while protecting against loud noises like heavy machinery or gunfire. Additionally, or alternatively, automatic noise cancellation (ANC) may be applied, which filters out specific repetitive ambient sounds, such as helicopter engine noise, and/or other unwanted noise to enhance clarity of other sounds like radio communication thereby ensuring important signals are heard clearly. Passive noise control may be used relying on the physical design of the headset (often/mainly of the earcups or earbuds) to block out external noise when the electrical communication circuitry in the headphones is inactive, offering a straightforward means of noise reduction without active intervention. A headset 3 may comprise both active and passive noise reduction.

### PTT control unit

The PTT control unit 5 may be an intelligent control box adapter with Push-To-talk (PTT) functionality such that communication to and from the headset 3 and/or one or more communication devices 9, 11 may be controlled via the PTT interface on the intelligent control box. The PPT control unit 5 may e.g. be in the form of a small body-worn box e.g. to be attached to a vest, suit, or other of the user 1. The unit 5 may contain several interfaces, for connecting a headset 3 and one or more communication devices 9, 11, typically referred to as communication ports or simply "COM port". The PTT control unit 5 may contain a simple (e.g. stealth mode) user interface for controlling the operation of the headset 3 and/or connected communication devices 9, 11 in an easy and intuitive manner. Stealth mode means without any emission of visual or auditory feedback to the surrounding environment. The user interface of the PTT control unit 5 may e.g. be in the form of tactile buttons for controlling one or more devices (3, 5, 7, 9, 11) as worn/carried and used by the user 1. The user interface of the PTT control unit 5 may also control or communicate with other external devices via an intercom system/communication hub. The user interface of the PTT control box may for example contain two main PTT buttons on the side and an additional two PTT buttons on the front for controlling respectively connected communication devices without exposing the wearer. The PTT control unit 5 may contain one or more buttons for controlling the connected headset 3 such that the different operation modes of the headset 3 may be activated, deactivated, or otherwise influenced.

The PTT buttons are configured to control the transmission of data or voice signals from the user 1 via one or more connected devices 9, 11 such that when one or more buttons are activated, the PTT control unit 5 is signalling one or more radios 9, 11 to start transmission.

A man worn communication equipment configured for dismounted operation is illustrated in Fig. 1A. A user 1, such as a soldier or public safety agent, is wearing a rugged circumaural hearing protection headset 3, such as the INVISIO T7, connected to a PTT control unit 5, such as the INVISIO V60 II ADP, comprising four dedicated PTT buttons, a mode button, three COMM interfaces and one headset interface. The user 1 may additionally be carrying (as illustrated) an End-User-Device (EUD) 7 in the form of a chest mounted rugged casing holding a smart phone or tablet connected with the PTT control unit 5. The EUD 7 may e.g. be running a "battle management system" such as "ATAK" for precision targeting, surrounding land formation intelligence, situational awareness, navigation, and data sharing via a smart phone interface. The user 1 may be a team leader in a squat thereby carrying a first radio 9, such as a Motorola SRX 2200 P25 single band two-way portable radio, for communication between team members in the squad and a second radio 11, such as a Harris RF-7800M-HH, for voice and data communication with a connected (communication device or system of) a headquarter or similar. In the illustrated example, both the first 9 and second radio 11 is connected to the PTT control unit 3.

The headset 3 and the PTT control unit 5 may constitute a set of "personal communication equipment" 13 associated with (or at least used by) the user 1 and configured for dismounted operation when connected to one or more of the communication devices 7, 9 and 11 configured to be worn by a person. The personal communication equipment 13 may additionally be configured to operate in a "mounted configuration", e.g. if connected to a stationary mounted system such as an intercom in a vehicle, boat, helicopter, etc.

In the dismounted configuration as illustrated in Fig. 1A, the EUD 7, the first 9 and second radio 11 may be operated by the user 1 (also) via the PTT control unit such that voice and data may be communicated between the headset 3 and one or more of the communication devices 7, 9 and 11 based on user interaction with the simple push button user interface of the PTT control unit 5.

In some embodiments, the PTT control unit 5 is integrated into the headset 3 (rather than being separate units as illustrated) such that the headset 3 may be adapted to connect directly to a man-worn communication device 7, 9 and 11 in a dismounted configuration, or to alternative communication devices such as an intercom system/communication hub via a wired cable link or short range wireless link such as the DECT protocol in a mounted configuration. If the PTT-control unit 5 is fully or partly integrated with the headset 3, the personal communication equipment 13 may be considered as a single unit 3 with the build-in functionalities related to the PTT control unit 5. An example of such as integrated device is e.g the 3M^{™} PELTOR^{™} ComTac^{™} and SWAT-TAC^{™} Protection and Communication headset having built-in PTT control functionality. In such case, the user 1 is able to operate the connected communication devices 7, 9 and 11 (e.g. in addition to one or communication devices connected to the user/the user's personal equipment via an intercom system/communication hub as disclosed herein) directly via the headset 3, e.g. via dedicated buttons of the headset 3.

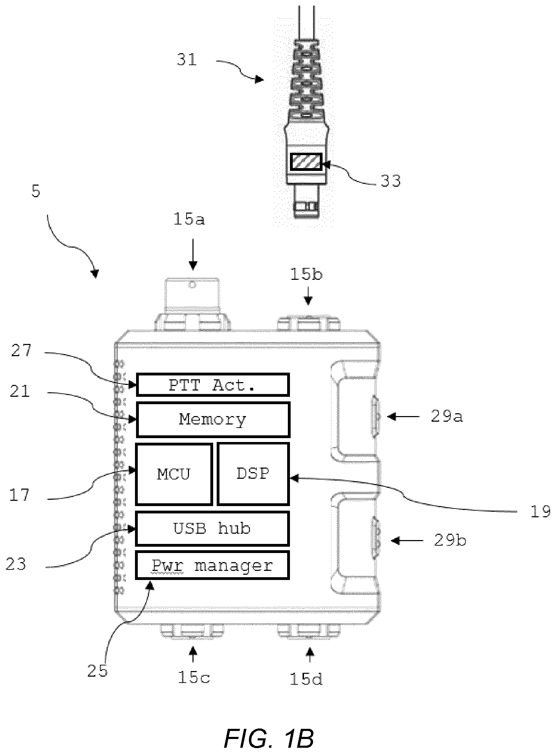

Fig. 1B schematically illustrates an example of a PTT control unit 5. The PTT control unit 5 may as an example have four connection interfaces 15a-d, one for connecting with a headset 3 and three for respectively connecting to a plurality of communication devices 7, 9 and 11. The PTT control unit 5 may contain a main control unit (MCU) 17 such as an ARM or FPGA processor or similar for executing instructions, controlling other units, and/or performing complex computational tasks. The MCU 17 may for example be configured to operate an artificial neural network engine configured to execute algorithms such as one or more of speech recognition, voice-to-text, image classification, etc. The MCU 17 may be in connection with a dedicated digital signal processing DSP unit 19 for advanced analog and/or digital signal processing, enhanced situational awareness, 3D directional sound processing, advanced signal processing, active noise cancellation, etc. and with a memory 21 for storing setting and instructions. The MCU 17 may further be in connection with a USB hub 23 for administrating and negotiation of digital data protocols with connected devices with digital capabilities and a power manager 25 controlling power routing via the PTT control unit 5 (such as powering the PTT unit 5 itself and a connected headset 3 via an internal battery or a connected radio with power sharing capabilities) directing power to or from a connected power bank or external power source to e.g. charge a radio 9 or 11 or the EUD 7. The PTT control unit 5 may further contain a Bluetooth transmitter or near-field wireless communication component (not shown) for short range wireless communication with additional devices forming part of the personal communication equipment 13 and/or other devices as used by the user. The PTT control unit 5 may additionally contain a push-to-talk actuator module 27 handling activation events associated with push buttons 29a and 29b on the PTT control unit 5 in relation to the connected communication devices (7, 9, 11) so that a communication device 7, 9, 11 or headset 3 can be operated via one or more push buttons on the PTT control unit 5. When a user activates the physical Push-to-Talk (PTT) button 29a and 29b on the control unit 5 of a tactical communication system, a Carrier Operated Relay (COR) or Carrier Operated Switch (COS) signal may be generated or triggered by the actuator module 27 and transmitted to the corresponding communication device 9 or 11 associated with the PTT button activated additionally the microphone in the headset 3 may be unmuted. The COR/COS operates by generating a digital signal that switches between logic levels (typically +5V and Ground), indicating the activation of the transmitter by activating the squelch circuit in the communication device thereby allowing the communication device to transmit a signal. The push buttons 29a and 29b on the PTT control unit 5 may also control external devices via an intercom system/communication hub as disclosed herein.

It is noted, that the PTT control unit 5 may comprise further push buttons than illustrated in Fig. 1B, e.g on front side as described previously.

When a communication device 7, 9, 11 and/or headset 3 is connected via a dedicated (e.g. male) connector 31 configured to interface with a respective (e.g. female) connection interface 15a-d on the PTT control unit 5, information and functional settings may be transmitted via the connection interface e.g. or preferably as described in EP2845115B1 (hereby incorporated by reference in its entirety) from a "cable chip" 33 embedded or located in the connector 31 (or alternative embedded or located in the cable of the connector 31 or elsewhere). The cable chip/microchip 33 may comprises an embedded memory storing data representing code and/or instructions. When the connector 031 is connected with a respective connection interface 015a-d, the connector interface data (such as information, (configuration) settings, code, instructions, etc.) may be transferred directly from the cable chip 33 to the MCU 17 for configuration or other related to the connected device (as connected by the connector 31).

The connector pair 15a-d and 31 should preferably be suitable for military and security applications such as an ODU AMC^{®} connector with between 3-55 contacts and be water resistant.

Inside the cable chip 33 (and/or an associated memory), a dynamic set of settings may be stored. When the memory is read, the settings may be transferred into the MCU 17 and distributed to the appropriate sections of the code or peripheral internal units such as the DSP. The stored information/data of the cable chip may organized as a list of "features calls" followed by specific settings associated with the requested feature. Thus, the cable chip 33 may store feature-requests when read by the MCU will cause the processors to execute instruction stored in the memory 21 of the control unit 5 corresponding to the specific functionality associated with a "feature" applied using the specific set of settings transferred from the cable chip 33. Examples of features may be Audio Interfacing, which may define audio interface, impedance, gain, etc, Push-To-Talk / Protocol Interfacing, which may define protocols such as UART, USB, pulsing interface, Control functions, which enables specific functionality based on conditions such as VOX, Ul definitions which may define short/Long press of PTT button functionality or Mode button functions and key combos (combination of different button presses simultaneously), Audio algorithms, and audio routing that may adjust the flow of the audio including multi headset setup, crossbanding (relay) between connected radios and side tone in headset.

However, the cable chip 33 may additionally or alternatively be used for device authentication and/or for specific user rights or accesses associated with the specific cable.

Thus, the PTT control unit 5 may be configured to operate both data and voice communication channels on connected communication devices 7, 9 and 11 in communication and response to the user speaking (VOX) and/or pushing one or more buttons on the PTT control unit. Based on the configuration of devices illustrated in Fig. 1A (i.e. setup e.g. like their number, type, and/or respective connections), the personal communication equipment 13 may be configured such that communication is handled in the following manner. Communication from the first radio 9, e.g. receive or "Rx" is directed to the user 1 via loudspeakers in both the left and right earcup of the headset 3. Communication from the user 1 e.g. transmit or "Tx" via the first radio 9 may be activated by the voice of the user referred to as "voice-operated exchange" or "VOX". In a voice activated transmission configuration, the PTT control unit 5 may be configured to process signals recorded by the microphone dedicated for user voice communication in the headset 3, such that when the user 1 is speaking, the MCU 17 may process the sound signal from the microphone and detect a speech signal thereby recognising an activation event and the MCU 17 may thus signal the PTT actuator module 27 accordingly. In response to the activation event, the PTT actuator module 27 may send an electrical signal to a PTT circuit in the first radio 9 configuring the radio to activate a transmission mode and allowing the user to transmit a voice signal via the radio 9. The second radio 11 may e.g. be configured in a dual net operation, such that voice communication can be performed via two separate channels or frequency bands simultaneously. The personal communication equipment 13 may be adapted such that two PTT-buttons 29a and 29b on the PTT control unit 5 may respectively be assigned to transmitting a voice message via the respective two separate nets. In response to the user activating the first PTT-button 29a by pressing the button physically, the PTT actuator module 27 may register an activation event similar to the VOX situation but associated with a PTT button 029a and thereby signalling a PTT circuit in the second radio 11 associated with net 1, as previously described. Similarly, the second PTT button 029b may be used to transmit a voice signal via net 2 on the second radio 11. The PTT control unit 5 may enable the user to communicate via a specific communication device by performing an action, such as pushing a button or start speaking (VOX), where this action may also be referred to as latching in on a communication channel. Voice communication via the EUD may be controlled via two additional push-buttons (not shown), one button associated to digital "picking up call" signalling from the PTT control unit 5 to the EUD in relation to receiving a cell phone call and one button for "hang up call" for ending a call. Different push-button combinations ("key combos") may be used for more advanced actions, such as transmission of specific data or configuring the way the loudspeakers in the headset should emit sound, such as left/right ear only, mute all communication, mute single communication channel etc.

The PTT control unit 5 may additionally or alternatively contain instructions related to assigning PTT buttons 29a and 29b and functionality following a hierarchical scheme. Depending on the type of connected communication device, one or more buttons may be requested to support the communication capabilities of the connected device such as two buttons would be requested if a dual net ratio is connected and three buttons in case of a tri net interface, etc. This is advantageous in combination with the cable chip functionality, as a default scheme may be applied if the cable chip data fails to specific unique instructions providing a system with an intuitive default configuration behaviour across communication platforms.

A special set of PTT allocation rules may be applied by the PTT control unit 5 to facilitate easy and intuitive operation and a dynamic use. Individually connected communication devices 7, 9 and 11 may request a number of buttons to operate the device via the simple push button interface on the control unit 5. As a limited number of physical buttons are available on the device 5, a negotiation scheme may be implemented for button allocation. The rules may as an example e.g. be:
Rule 1: All connected devices are communication devices 7, 9 and 11 and are allowed a minimum of one PTT button if requested by the device/cable.
Rule 2: PTT allocation is prioritized according to port number 15b-d (when port number 15a is used/to be used by a headset.
Rule 3: When a tri-net Interface (communication device having three dedicated communication channels) has highest priority and another multi-net communication device is connected, one of the nets of the tri-net will be given up (no dedicated PTT button are assigned).
Rule 4: When a quad-net interface has highest priority and another multi-net interface is connected, two of the nets of quad-net will be given up (no dedicated PTT button are assigned) to allow more than one net on another multi-net interface to function.

In case additional wireless remote PTT buttons are connected, additional rules may be applied such as:
A five button wireless remote may mimic the entire control unit 5 (two additional PTT buttons and a mode button on the front face of the box not show in fig. 1B)

### Communication devices

A communication device may be a handheld radio 9, 11 providing voice and data communication in the VHF and UHF bands and offering secure and reliable communication in various operational environments such as an AN/PRC-152 or a radio 9, 11 for dismounted use which provides interoperable communication in multiple frequency bands and supports voice and data transmission,

A communication device may e.g. be a specialised radio system tailored for mounted operations, including the AN/VRC-110, a multiband radio system featuring components like the AN/PRC-117F(C) or AN/PRC-117G(C); the Thales AN/PRC-148 Vehicle Adapter Amplifier (VAA), which adapts the AN/PRC-148 handheld radio for vehicular use; the Collins Aerospace AN/ARC-210, primarily an airborne radio system but also utilized in some mounted vehicle applications for secure voice and data communication; and the Barrett PRC-2091, a vehicular-mounted version of the Barrett PRC-2090 HF tactical radio, offering long-range communication capability in the HF band for mounted operations. These systems are important for providing reliable communication links between military vehicles and command centers and facilitating coordination and situational awareness on the battlefield or in emergency situations.

A communication device may e.g. also be a mobile phone, satellite phone, a wireless dongle for establishing wireless communication to a communication device or any other suitable device facilitating wireless communication.

### Communication hub

The communication hub may be a portable intercom system for dismounted soldiers, public safety processional, etc. The intercom system may be deployed by the dismounted soldier in all environments (land, sea and air) to establish audio, data, and power network between the mounted vehicle crew members, the dismounted soldier, and vehicle/radio communication system(s). The intercom system may be fixed to a base station in a vehicle platform for a semi-permanent installed via accessories attachment methods.

The communication hub may be a lightweight unit that can easily fit into a backpack and be portable but is also capable enough to be mounted into a vehicle or the like and be expanded e.g. being interconnected with one or more additional/other communication hubs providing users easy access to intercom communication between users when connected to the communication hub, in addition to allowing the users access to external communications means such as radios, larger Intercom system, data and power sources, etc.

If used with a local battery, the system can work independently from a vehicle power source and therefore also be deployed outside a vehicle and used in a purely dismounted soldier scenario.

The communication hub may be able to handle data going in- and out of the user and comprise interface ports of the device using digital data transmission protocols such as USB 2.0 or USB 3.0 standards.

The communication hub may be configured to support at least 5 users and at least 4 communication devices while maintaining real-time communication in 3 or more separate talk groups simultaneously.

The communication device may be configured for Ethernet connection or the like for IP networks allowing two or more communication hub units to connect with each other to expand the number of users and communication devices in a total connected system and/or to connect a wireless gateway for short range wireless user connection using protocols like DECT etc. The Ethernet functionality may also be used to communicate with other Ethernet enabled communication devices, such as BGAN (broadband global area network) devices. The Ethernet connection may be shared with the power connector providing power over Ethernet.

When connected to the communication hub device, a user may perform direct conferencing with other connected users (i.e. with other users directly connected to the same particular communication hub) and/or conferencing with expanded users, when the communication hub is expanded to/connected to at least one additional communication hub device (i.e. expanded users are users directly connected to the at least one additional communication hub device). The connected users may key external communication devices using individual PTT (push-to-talk) control units and draw power directly from the communication hub to charge or power individual equipment such as EUD's running battle management system, radios, or portable power banks.

The communication hub may be configured to be powered by an external power source such as a battery, a vehicle, helicopter, etc. e.g. providing a voltage between 5V-36V. Users may draw or provide additional power such as 500mA and 5V via each connection interface.

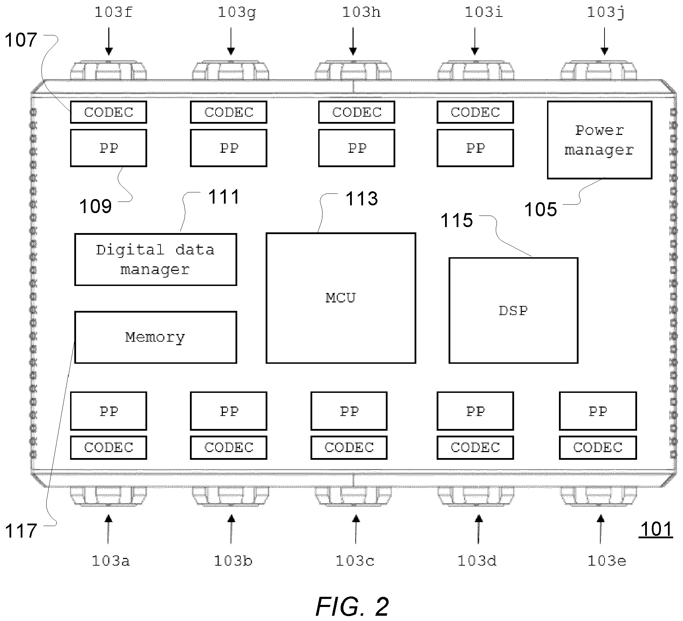

An example of a communication hub (device or system) 101 is illustrated in Fig. 2 where the hub 101 is equipped with a plurality, here ten as an example, of interface connections 103a-j for connection to one or more users (via an appropriate device of their personal communication equipment) and/or one or more communication devices. An interface connection 103a-j may generally be referred to as a COM port. The interface connections 103a-j are all for detachable connection with a respective device. One of the COM ports (in the illustrated example its COM port 103j) may be configured for power and data connection and coupled with a power management unit 105 to secure the correct power routing through the device 101 and prevent power spikes which otherwise may damage the unit 101 and connected components. The power manager 105 is configured to receive power from an external source such as a power system/power supply of e.g. a helicopter, a vehicle, a power bank, etc. and the power manager 105 may also provide power to the remaining communication interfaces 103a-l so that that connected equipment may be powered and recharged directly via the communication hub 105.

The (in this example) nine other ports (i.e. the ports not used for power and data connection) 103a-i may be configured to connect a user (via a device of the user's personal communication equipment) or a communication device, such that the COM ports are configured to be agnostic. Each of the COM ports 103a-i, may individually be coupled with a respective codec device 107, configured to control audio signals individually between a connected device and the communication hub 101, and with a port processor (PP) 109, such as a microchip microcontroller for Universal Asynchronous Receiver-Transmitter (UART) communications, typically involving two communication lines: one for transmitting signals/data (Tx) and one for receiving signals/data (Rx) to and from a user via their personal communication equipment.

Connected devices may be connected to the communication hub 101 via a connector interface containing a UN I/O microchip (cable chip) used to provide device specific information (associated with the respectively connected device) to the communication hub 101 as described previously in relation to fig. 1B. The port processors (PP) 109 may be configured to read and write data to the connected cable chip's Electrically Erasable Programmable Read-Only-Memory (EEPROM) thereby obtaining communication configuration information, device details, and other relevant information. This enables the system/the communication hub 101 to retrieve device specific information and configurations even from an analogue source, such as the type of radio connected, available PTT button interface in relation to personal communication equipment, etc. depending on the information/data available in the cable chip. Each port may additionally be coupled with a main digital data manager 111 configured to control digital data exchange(s). The digital data manager 111 may be configured to retrieve data (in addition or alternatively) related to a connected device directly from the device itself rather the via a cable chip using for example a USB protocol. The digital data manager may additionally route digital data between connected communication device(s) and/or connected personal communication equipment(s) such as digital GPS coordinates, digital images or video, digital voice, text transmissions, etc. A Main Control Unit (MCU) 113 may be in data communication with one or more of the other internal components. The MCU 113 may e.g. be a (ST) microcontroller system on a chip (SoC) using an ARM processor core based on a Reduced Instruction Set Computing Architecture (RISC). The MCU 113 may be configured to control all data communication in the communication hub 101 and contain a firmware layer operation system for handling the communication between the connected devices. A dedicated Digital Signal Processing (DSP) 115 module may be operably connected with the MCU 113. The DSP code may be based on the Pong Architecture used to connect to each of the individual codecs 107. One or more memory elements 117 may be used for storing instructions and code for the MCU 113 to perform the required digital operations. Data and communication links between the internal components of the communication hub 101 may be handled via Serial Peripheral Interface Bus (SPI) and/or Inter-IC Sound Bus (I2S) protocol (s).

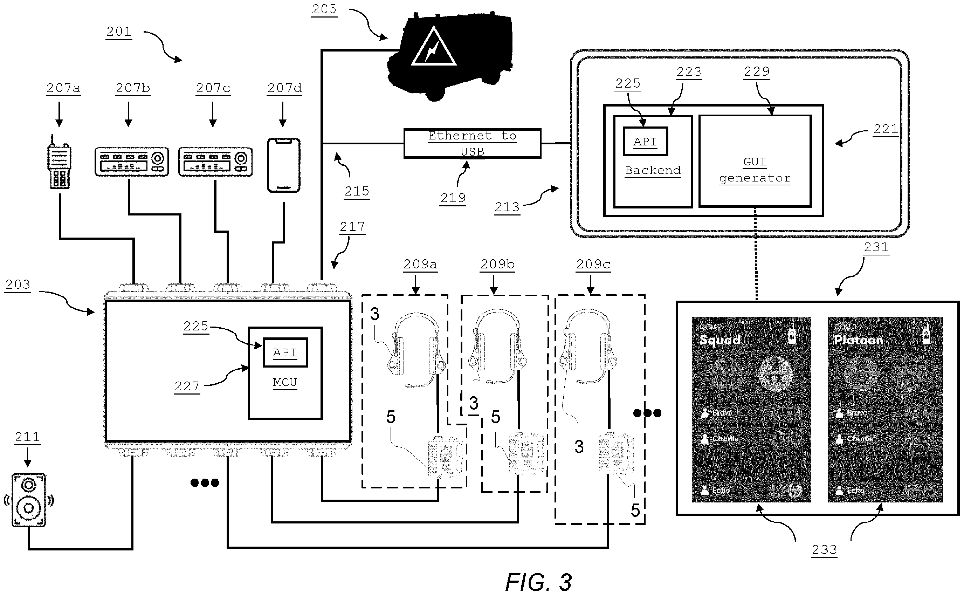

A user (see e.g. 1 in Fig. 1A) may connect directly to the communication hub 101 via (a device of) their personal communication equipment (see e.g. 13 in Fig. 1A) using a dedicated cable being (typically detachably) attached to a COM port (see e.g. 15a-d in Fig. 2) of a PTT control unit (see e.g. 5 in Figs. 1 and 2) and a suitable interface connector 103a-103i of the communication hub 101. The configuration of the communication setup may be initialized by reading system configuration instructions (or rather data representing this) associated with the connected cable chip (e.g. embedded on the connected dedicated cable). The system configuration instructions may enable the user to apply (via or at least initially by configuration instructions of the cable chip(s)) a specific set of individualized audio and volume settings of the personal communication equipment when communicating via the communication hub 101. The data representing system configuration instruction, such as the cable chip information/data, may additionally provide access for the user to one of more connected communication devices. Each of the individually connected devices, e.g. personal communication devices and communication devices, may be connected to the communication hub using a cable with a cable chip and individual configuration instructions, such that the communication hub 101 may initialize by reading instructions from the plurality of connected cable chips and configuring the overall system (i.e. each of the individually connected devices, e.g. personal communication devices (see e.g. 209a-c in Fig. 3) and communication devices (see e.g. 207a-d) that may be connected to the communication hub and the communication hub) according to the sum of instructions or taking the totality of the instructions into account. In one example, a plurality of connected devices (e.g. personal communication devices and communication devices) and the communication hub 101 may be pre-configured to a special or particular need or situation, such that individual cables for connecting personal communication equipment may be pre-programmed according to the user's role in the need or situation. For example, a "gunner" operating a roof mounted machinegun in an armoured military vehicle may have pre-programmed instructions in the cable chip (of a cable connecting the gunner's personal communication equipment) associated with a specific particular configuration and the "navigator" and "driver" may e.g. have different pre-programmed instructions in their respective cable chips (i.e. in the respective cable connecting their respective personal communication equipment). Cable chips for different communication devices may additional be pre-programmed according to the intended use of the specific communication device, such as for example a AN/PRC-148 Multiband Inter/Intra Team radio may be used for the communication within the team in and around the vehicle and an a mounted SYNAPS-V 2-channel V/UHF integrated radio from Thales may be used for communication between the vehicles and remote headquarter or base. When the "gunner", "driver", and "navigator" connect their personal communication equipment with the individually pre-configured cable chip settings to a communication hub 101 also connected to a "team radio" and a mounted "vehicle radio", the plurality of connected devices and the communication hub 101 may initialize the communication configuration and access according to the cable chip settings. The cable chip for the "team radio" may provide access to members of a virtual talk group 2 and 3 and the "vehicle radio" may provide access only to virtual talk group 2. The communication hub 101 may establish an internal virtual talk group 1 for all users plugged-in to the hub 101 (i.e. have their personal communication equipment connected to the communication hub) for providing internal communication in the respective group. The cable chip settings of the "gunner" may provide access to virtual talk group 1 and 2, whereas the "driver" and "navigator" are allowed access to virtual talk group 1, 2, and 3. A virtual talk group should be understood as individual settings allowing specific accesses.

In at least some embodiments, any further equipment (e.g. like the EUD 7 and radios 9, 11 or only the radios 9, 11 of Fig. 1A) may be disabled when a personal communication device (e.g. 3 or 5 of Fig. 1A) of the set of personal communication equipment (see e.g. 13 in Fig. 1A) is connected with the communication hub. In alternative embodiments, the further equipment (e.g. like the EUD 7 and radios 9, 11 or only the radios 9, 11 of Fig. 1A) is not disabled and are allowed to communicate (and be controlled as disclosed herein) via/by the communication hub.

### Wireless mode

In wireless mode or partial wireless mode, the communication hub comprises or is extended with a wireless module or gateway containing one or more antennas and processors providing a wireless network with a limited range e.g. of around 500 meters line of sight such as a network according to the Digital Enhanced Cordless Telecommunications (DECT) protocol. A personal wireless dongle may be connected to a user's PTT control unit enabling access to the communication hub via a wireless link. In this situation, the user may remain in an unmounted state while still being able to communicate via the communication hub within the range of the wireless network.

### Software module

The communication system may contain a control and visualisation module (see e.g. 221 in Fig. 3), which may be a piece of software e.g. adapted to run on an Android- or Windows-based platform. The control and visualisation module may be executed directly in the communication hub or via an auxiliary unit operably connected to the communication hub such as a tablet. The control and visualisation module is designed to control and visualize the complex audio routing happening inside the communication hub when connected to a plurality of communication devices and one or more users via personal communication equipment as disclosed herein.

Communication between the control and visualization module and the communication hub may e.g. be facilitated using a JSON (JavaScript Object Notation) protocol sent in clear text over and Ethernet or other suitable data connection and/or protocols. A token may be generated for each communication request to validate the authenticity of both control and visualisation module and communication hub to prevent unauthorized components which is advantageous as communication devices may be associated with confidential data transmission and secure communication channels required in demanding environment.

The communication hub may expose an Application Programming Interface (API) component (see e.g. 225 in Fig. 3) to facilitate the data exchange between the control and visualization module and the communication hub.

The API may consist of communication instruction elements such as "getters", "setters", and "events". The "getters" may be used for gaining information about the current setup in the communication device like currently connected ports, volume levels, audio routing, active relays and more. The "setters" are used to modify the current setup by changing volumes, sidetone, routing, etc. "Events" may be sent by the communication hub to the control and visualisation module to notify of changes, such as user or communication devices being connected or disconnected as cables being plugged or unplugged or real-time communication data to or from users and communication beginning and ending.

The software module may contain a backend process that translates between API requests and responses and objects usable in the user interface. This process handles communication and the security of the connection.

The control and visualisation module may contain a Graphical User Interface (GUI) component (see e.g. 229 in Fig. 3) configured to generate visual GUI element(s) to be displayed on a display screen for the control and interaction between an operator or user of the system and the communication hub. The GUI is generated to provide an instant e.g. real-time overview of the internal routing and activity of the communication hub as well as controlling the configuration - and thereby the communication - of the system. The GUI may be adapted to display and control how each user is linked to the connected communication devices and shows the status of communication between these in real-time, all as disclosed herein. The various setting menus allow the user to modify the system via dedicated user interaction on GUI such as changing radio access, adapting volumes and more in the Intercom.

Fig. 3 schematically illustrates an example of a communication system 201 configured to dynamically control the configuration of a tactical communication system to be used in demanding environments. The system contains a communication hub 203 which may be located and powered from a vehicle, such as a van 205. In at least some embodiments, the communication hub 203 corresponds to the communication hub 101 of Fig. 2. A number, here four as an example, of connected communication devices 207a-d are coupled with the communication hub 203. The first communication device 207a may e.g. be a Harris AN/PRC-163 Multi channel handheld radio for communication between a crew in the van and a team outside in relatively close proximity. The second communication device 207b may e.g. be a vehicle mounted long range tactical radio device such as Motorola APX 6500. The third communication device 207c may be a Harris FALCON III^{®} RF-7800M-MP, and the fourth communication device 207d may be a Thales VENUS Satcom military satellite communication system for communication over long distances. Additionally, three (as an example) users (see e.g. 1 in Fig. 1A) are connected to the communication hub 203 via respective personal communication equipment 209a-c. In at least some embodiments, each or at least some of the personal communication equipment 209a-c corresponds to the personal communication equipment 13 of Fig. 1A. In at least some embodiments, the illustrated PTT control units corresponds to the PTT control unit 5 illustrated in Fig. 1B.The communication hub 203 are (in the illustrated embodiment) also connected to an auxiliary unit 211, here as an example in the form of a portable loudspeaker 211 e.g. to be located inside the van 205. The communication hub 203 is furthermore connected to a rugged tablet 213 or the like with a touch screen e.g. via a splitter cable 215 (where the other part connects to the van 205). The power and data port 217 may contain two twisted pairs made for Ethernet communication. The tablet 213 can either be connected directly or via a larger Local Area Network (LAN) or even a WIFI network if an appropriate WIFI adapter is connected with the communication hub. The splitter cable 215 may optionally contain an adapter unit such as an Ethernet-to-USB converter 219 for adapting the data communication to fit to the interface of the tablet 213. The tablet or the like 213 may contain hardware components for executing software modules, drivers and scripts, such as a processor, memory, etc. as generally known (not shown) and the tablet 213 may contain one or more software components such as a dedicated control and visualisation module application 221 configured to control the communication hub 203 and one or more, e.g. or preferably all, of the connected devices 207a-d, 209a-c, and 211. The control and visualisation module application 221 may contain a backend process 223 that translates between API requests and responses and operating elements 231 usable in the user interface 233. The backend process 223 handles the communication and the security of the connection between the visualisation module application 221 and the communication hub 203 and an API interface 225 may facilitate the communication between the main controller unit (MCU) 227 of the communication hub 203 and the control and visualisation module application 221 to the control and visualisation module application 221 to exchange data and settings with the communication hub 203. In at least some embodiments, the MCU 227 of the communication hub 203 corresponds to the MCU 113 of Fig. 2. The control and visualisation module application 221 may additionally contain a GUI generator 229 configured to dynamically create and visualize an overall digital GUI element 231 allowing a user or operator (of the tablet 213) to control the operation of the connected devices 207a-d, 209a-c and 211 as well as visualizing the communication traffic between the connected devices 207a-d, 209a-c and 211 via respective communication traffic overview GUI (sub-)elements 233 to the user or operator (of the tablet 213).

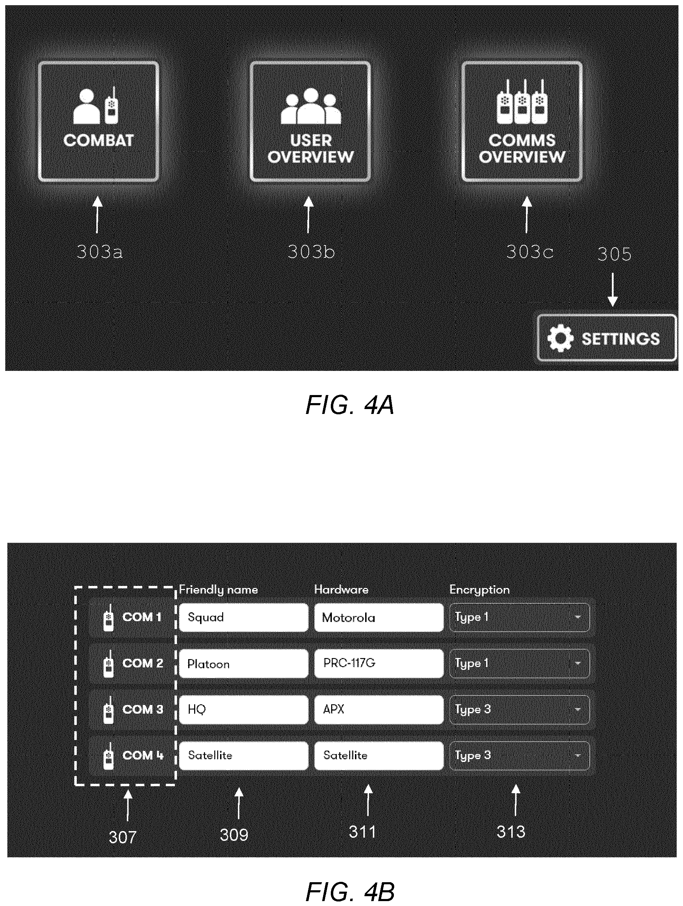

Figs. 4A-D schematically illustrate examples of different digital GUI element layouts containing one or more interactive operating elements for a user to control the communication system as disclosed herein. A control and visualisation module application (see e.g. 221 in Fig. 3) of a tablet or similar (see e.g. 213 in Fig. 3) may generate and provide a screen or GUI element comprising GUI (sub-)elements like 'tiles' or menu items to be presented to a user and for receiving selection(s) from the user, the user operating the tablet or similar, for `on-the-fly' dynamic configuration of a highly individualised or at least highly individualisable communication system (see e.g. 201 in Fig. 3). The communication system comprises a communication hub (see e.g. 101 in Fig. 2 and 203 in Fig. 3). An initial configuration of the communication system may be generated based on configuration data read from the cable chips via respective connection interfaces in the communication hub as disclosed herein. The control and visualisation module application allows the user to overwrite the pre-configuration and adjust the settings. In at least one embodiment, the control and visualisation module application allow a user to overwrite a pre-configuration and adjust the settings in a temporary manner, such that user-defined changes to settings are not overwriting the actual cable-chip settings in the cables as such, but instruct the MCU to temporarily apply a different or modified set of settings thereby efficiently adapting the overall functionality of the communication system. This is advantageous as default settings can then easily be restored avoiding unintended hard-coded reconfigurations to be applied to each individual cable chip potentially conflicting with other similar communication system a user may eventually connect to. In a preferred embodiment, the communication hub 201 may restore original settings when the connection between the MCU and the control and visualisation module application is terminated. This is an advantage in relation to securing integrity in the system making sure that tactical communication can be maintained even in case the control and visualisation module application should crash or malfunction. The control and visualisation module application may store custom settings in a template library, such that individually optimized settings may later easily be obtained and applied after the control and visualisation module application has been disconnected and reconnected.

Fig. 4A illustrate an initial screen or GUI layout 301 comprising three (as an example) main tiles or GUI (sub-)elements being a communication traffic tile/element 303a, a user configuration tile/element 303b, and a communication device configuration tile/element 303c. The user may, via a touch display, keypad, mouse, or another type of UI element, select a settings tile/element 305 to configure the communication system.

Fig. 4B illustrate an example of the communication device configuration menu accessible by clicking the tile/element 303c of Fig. 4A. The menu may be displayed as a list or the like that may be automatically generated based on the actually connected communication devices (see e.g. 207a-d in Fig. 3) and the menu shows a digital representation 307 of the connected communication devices (see e.g. 207a-d in Fig. 3) (or a sub-set thereof e.g. if larger than what can be fitted on a display of the tablet at once) and allow for a naming or renaming 309 of the respective communication devices as well as a hardware specification category 311 and a security level category 313 for each connected communication device. A similar or corresponding configuration page may be generated and provided for naming/re-naming users (see e.g. 209a-c in Fig. 3) connected with the system (via their respective wearable personal communication equipment).

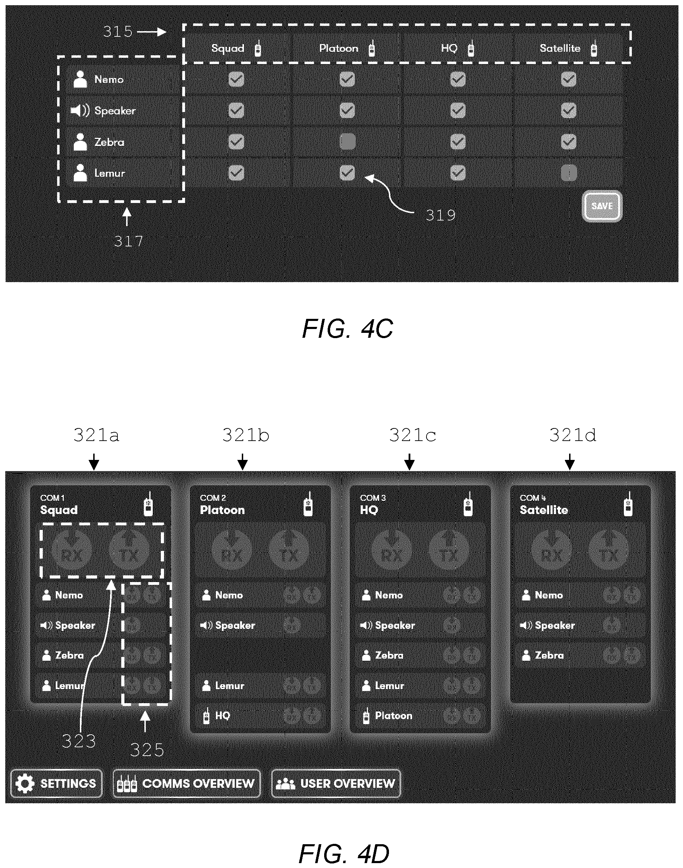

A communication configuration menu, as displayed in Fig. 4C, may provide functionality for a simple on-the-fly adjustment(s) or designation(s) of associations between presently connected users and presently connected communication devices so that communication traffic rights and accesses readily and simply can be designated and be controlled. The association scheme may be illustrated (as shown) in a grid-like layout showing the connected communication devices (see e.g. 207a-d in Fig. 3) in a horizontal row 315 (where the respective named or designated labels, set or settable by 309 in Fig. 4B, is used) and the connected users (see e.g. 209a-c) in a vertical column 317 (where the respective named or designated labels is used, set or settable by a step corresponding to 309 in Fig. 4B but just for users). The grid-like layout further illustrates individual associations between specific users and communication devices 319 that may be toggled on/off via the touch display/user interface by the user or operator of the tablet or the like thereby efficiently and simply controlling the configuration of communication traffic of the communication system and the connected devices thereof. Based on the connected communication devices (see e.g. 207a-d in Fig. 3) and users (see e.g. 209a-c in Fig. 3) and the associated respective connections between them, a communication traffic overview may be generated as displayed in Fig. 4D. The communication traffic overview may be organized by module group tiles/elements 321a-d in accordance with the connected users and communication devices and the set/selected (as in/by Fig. 4C) associations there between. The communication traffic overview tiles/elements may (each) display one or more main indicators 323 and a plurality of sub-indicators 235 providing real-time visual feedback via the user interface in response to communication traffic being received or transmitted by a communication device and/or via individual personal communication equipment of a user. The one and more main indicators 323 may e.g. or preferably comprises a transmit indicator (designated Tx and an arrow up) and an receive indicator (designated Rx and an arrow down) associated with an actual transmission and receiving status of a communication device in question. As one example, a main Tx indicator 323 may change colour if the communication device in question is transmitting a signal and the main Rx indicator 323 may change colour (preferably to another colour than for when a signal is transmitted) if the communication device is receiving an incoming signal. In some embodiments, the main Tx indicator 323 changes colour to a green colour if a signal is transmitted and the main Rx indicator 323 changes colour to a red colour if a signal is received. The sub-indicators 325 may similarly (each) constitute a pair of Tx and Rx sub-indicators, such that if the communication device is receiving an incoming signal and the signal is distributed and emitted via the user's personal communication equipment, the Rx sub-indicator 325 for that user may change colour and likewise for the Tx sub-indicator 325. In some embodiments, the Tx sub-indicator 325 changes colour to a green colour if a signal is transmitted and the Rx sub-indicator 325 changes colour to a red colour if a signal is received.

In at least some embodiments (and as illustrated in Fig. 4D), the communication traffic overview comprises one group tile/element 321a-d for each connected communication device and listing the users and equipment that is configured to be able to and allowed to communicate (Rx and/or Tx) with each connected communication device. In the illustrated example, the communication traffic overview comprises a first group tile/element 321a for the communication device (see e.g. one of 207a-d in Fig. 3) presently connected to the COM1 connector of the communication hub (see e.g. 101 in Fig. 2 or 203 in Fig. 3) displaying "COM1", it is name/label "Squad" (according to 309 in Fig. 4B), a main Rx indicator 323 and a main Tx indicator 323 for the communication device presently connected to COM1, and a list of users/equipment being designated to belong to (i.e. controlled to belong to) be able and allowed to use the particular communication device presently connected to COM1 (in the illustrated example the users designated "Nemo", "Zebra", and "Lemur" (see e.g. 209a-c in Fig. 3) and the equipment designated as "Speaker" (see e.g. 211 in Fig. 3) as well as a sub-indicators 325 for each listed user/equipment. It is noted, that the GUI element(s) of all listed users comprises a pair of Tx and Rx sub-indicators 325 (as they have the capability to both transmit and receive), the GUI element of the equipment "Speaker" only comprises (in this particular example) an Rx sub-indicator 325 as it can only receive (and play/render) a communication signal but cannot obtain and provide/transmit a communication signal. If the speaker in question comprised a mic or similar, a Tx sub-indicator 325 would also be present. It is also noted that the user(s) is/are or may be handled in sort of an indirect way where a particular personal communication equipment (e.g. of a set of personal communication equipment) represents or is associated with a respective specific/particular user. So when the particular personal communication equipment is connected with the communication hub, it is seen as the user (of that particular personal communication equipment) is connected. This makes it easy to detect and handle newly connected and newly removed users (just by checking whether the particular personal communication equipment is connected or removed) and also avoid the need (at least for these purposes) for user profiles and other types of user identification/handling. Thus a particular personal communication equipment (see e.g. 209a-c in Fig. 3) represent a particular user (and the other way around).

Likewise, the illustrated communication traffic overview comprises a second group tile/element 321b for the communication device (see e.g. one of 207a-d in Fig. 3) presently connected to the COM2 connector of the communication hub (see e.g. 101 in Fig. 2 or 203 in Fig. 3) and displaying "COM2", it is name/label "Platoon" (according to 309 in Fig. 4B), a main Rx indicator 323 and a main Tx indicator 323 for the communication device presently connected to COM2, and a list of users/equipment being designated to belong to (i.e. controlled to belong to) be able and allowed to use the particular communication device presently connected to COM2 (in the illustrated example the users designated "Nemo" and "Lemur" (see e.g. 209a-c in Fig. 3), the equipment designated as "Speaker" (see e.g. 211 in Fig. 3), and the communication device designated as "HQ" (which in the example is the communication device connected to COM3), as well as a relevant sub-indicators 325 for each listed user/equipment (a pair of Tx and Rx sub-indicators 325 for each of users "Nemo" and "Lemur" and the communication device "HQ" and an Rx sub-indicator 325 for the equipment designated "Speaker"); a third group tile/element 321c for the communication device presently connected to the COM3 connector of the communication hub and displaying "COM3", it is name/label "HQ" (according to 309 in Fig. 4B), a main Rx indicator 323 and a main Tx indicator 323 for the communication device presently connected to COM3, and a list of users/equipment being designated to belong to (i.e. controlled to belong to) be able and allowed to use the particular communication device presently connected to COM3 (in the illustrated example the users designated "Nemo", "Zebra", and "Lemur", the equipment designated as "Speaker", and the communication device designated as "Platoon" (which in the example is the communication device connected to COM2), as well as a relevant sub-indicators 325 for each listed user/equipment (a pair of Tx and Rx sub-indicators 325 for each of users "Nemo", "Zebra", and "Lemur" and the communication device "Platoon" and an Rx sub-indicator 325 for the equipment designated "Speaker"); and finally a fourth group tile/element 321d for the communication device presently connected to the COM4 connector of the communication hub and displaying "COM4", it is name/label "Satellite" (according to 309 in Fig. 4B), a main Rx indicator 323 and a main Tx indicator 323 for the communication device presently connected to COM4 and a list of users/equipment being designated to belong to (i.e. controlled to belong to) be able and allowed to use the particular communication device presently connected to COM4 (in the illustrated example the users designated "Nemo" and "Zebra" and the equipment designated as "Speaker", as well as a relevant sub-indicators 325 for each listed user/equipment (a pair of Tx and Rx sub-indicators 325 for each of users "Nemo" and "Zebra" and an Rx sub-indicator 325 for the equipment designated "Speaker").

During operation, a specific user (see e.g. 1 in Fig. 1A or 209a-c in Fig. 3) may transmit a signal via the communication system (see e.g. 201 in Fig. 3). One of the associated communication devices (see e.g. 207a-d in Fig. 3) may be keyed from the personal communication equipment of the specific user as described previously (latch in), such as by pressing a PTT key or by activating a Voice Operated Exchange (VOX) function, and a communication signal may be transmitted via the (specific user's personal communication equipment, the communication hub (see e.g. 101 in Fig. 2 or 203 in Fig. 3) and ultimately the) communication device causing the main Tx indicator 323 (for the communication device/COM port in question) in the GUI on the tablet or the like (see e.g. 213 in Fig. 3) to change colour and furthermore causing, in the GUI, the individual Tx sub-indicator 325 associated with the specific user generating the communication signal to change colour. A pair of indicators for Tx and Rx individually may be advantageous for tactical communication in demanding environments as the personal communication system may be configured with full duplex capabilities, which may allow both incoming and transmitted signals to handled simultaneously, such that a user may hear a voice message while they are speaking over a radio such that communication flow is not interrupted.

In some embodiments, the signalling of activity may be done in another way than changing the colour (this may at least in some further embodiments also be done in addition to changing the colour). This may e.g. involve one or more of causing the tablet or the like to vibrate (e.g. in a certain vibrational pattern among a plurality of patterns), emit a sound or other signal, or in principal any other user perceivable function by a suitable element of the tablet or the like. However, changing the colour or on/off illumination provide intuitive visual feedback on the screen enabling complex simultaneously communication to be monitored collectively. It is particularly advantageous to provide signalling in different visual modes such as colours as incoming or outgoing audio from a radio and/or user may be visually identified and associated with one or more users directly thereby providing a visual confirmation that the right users are receiving the right information, which often is critical in tactical communication systems in demanding environments. Having individual illumination signals for received and transmitted signal is beneficial as it clearly indicates the direction of the audio. The user may clearly see if they should pay extra attention to incoming messages in high noise environments. For example, a user may visually see that the "HQ" is transmitting a voice message (Rx icon illuminating), which might have a critical status. This enables the user to pay extra attention to the message even though voice from different sources such as another team radio internal communication is present in the headset of the user simultaneously, thereby enabling the user to focus on a specific important voice message and mentally suppress secondary voice input.

Additionally, quick troubleshooting is also provided or enabled. It is for example possible to organise and present all users in a simple GUI, even suitable for a relatively small display area. Furthermore, it is very intuitive (in particular when using red and green colours as described) to grasp whether a user (or the user's device/equipment) is transmitting or receiving when transmitting or received a communication signal. As another example, it is also readily observable (e.g. viewing a transmit Tx indicator) to see that a PTT button of a PTT control unit is faulty or broken and e.g. are keying the whole time or erratically, which may otherwise obstruct critical communication.

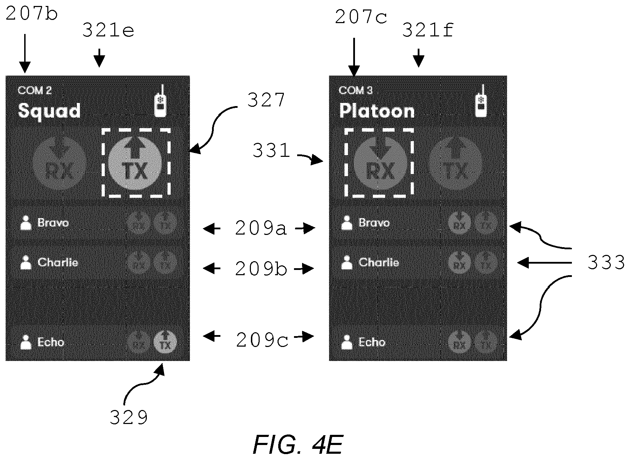

Fig. 4E schematically illustrates an example of a real-time snapshot of at least a part of a rendered GUI of e.g. a tablet or the like (see e.g. 213 in Fig. 3) of controlled communication in a communication system as disclosed herein (see e.g. 201 in Fig. 3). The rendered GUI comprises, as an example, two expedient communication traffic overview GUI (sub-)elements or tiles 321e and 321f.

The (in the figure) left communication traffic overview GUI element 321e display a communication group associated with a communication device 207b "COM 2" named or designated "Squad" and connected users 209a-c named "Bravo", "Charlie", and "Echo" that has (been controlled to have) access to the specific communication device (i.e. the one physically and typically releasably connected to the COM2 interface connector of the communication hub (see e.g. 101 and 103a-i in Fig. 2 and 203 in Fig. 3) in accordance with predetermined cable chip settings and/or the Communication selection manager e.g. as displayed in Fig. 4C.

The (in the figure) right communication traffic overview GUI element 321f display another communication group associated with a communication device 207c "COM 3" named or designated "Platoon" and connected with the same users 209a-c as in the left element 321e. The left communication traffic overview element 321e shows an activated main Tx indicator 327 and a Tx sub-indicator 329 in a first colour (green as an example). The main Tx indicator 327 is activated in response to a signal being transmitted via the communication device 207b (i.e. the one connected to COM2) to a remote receiver thereby providing a clear visual indication of a which communication device currently/presently (i.e. right now) is used for transmitting a signal. Additionally, the Tx sub-indicator 329 associated with user 209c "Echo" is activated in response to the user performing an action (causing the transmission of the transmitted signal via the communication device 207b) via the personal communication equipment of the user, such as pressing a PTT button to trigger a connection with the communication device (207b) (latch in) for transmission of a signal such as a voice message. Accordingly, the left communication traffic overview element 321e provides an easy and intuitive overview of communication traffic on both a communication device level and an individual user level. That such an overview readily convey important information and control status, e.g. or preferably at 'a glance' may be very significant or even crucial in demanding environments.

The right communication traffic overview element 321f show an activated main Rx indicator 331 and multiple Rx sub-indicators 333, all in a second colour (red as an example). The main Rx indicator 331 is activated in response to a signal being received via the communication device 207c (i.e. the one connected to COM3) from a remote sender thereby providing a clear visual indication of which communication device currently/presently (i.e. right now) is being used for receiving a signal. Additionally, a plurality of Rx sub-indicators 333 respectively associated with users 209a-c "Bravo", "Charlie", and "Echo" are activated in response to a signal being emitted to/received by the users in question via their respective personal communication equipment connected with the communication system (see e.g. 209a-c being connected with 203 in Fig. 3). The visual indication provided by the right communication traffic overview element 321f provide an intuitive monitoring of which users that presently are receiving messages or signals via the communication device connected to COM3.

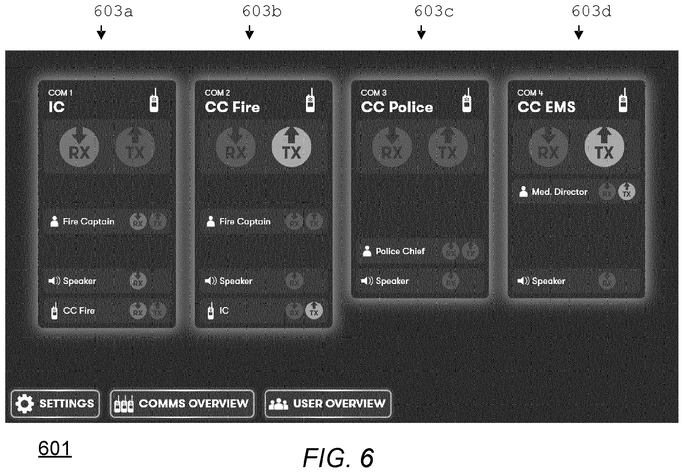

An appropriate GUI, e.g. or preferably on a tablet or the like such as the one illustrated by 213 in Fig.3, may comprise one or more of such communication traffic overview GUI elements like 321e and 321f, and ideally comprise communication traffic overview GUI elements for all users (see e.g. 1, 209a-c) and all connected communication devices (see e.g. 207a-d) connected to a communication hub (see e.g. 101 in Fig. 2 and 203 in Fig. 3) or at least the ones that are useful or beneficial to see an overview for in a given scenario, setup, etc., e.g. as illustrated in Figs. 4D, 6, etc.

The monitoring overview displaying the activated Tx and Rx sub indicators 329, 333 may additionally also be used for troubleshooting in case a set of personal communication equipment is misbehaving; a visual indicator will provide clear indication of the malfunctioning equipment. A broken PTT control unit may unintendedly latch in on one or more communication devices creating noise and signal interruptions, or a broken connection to a personal communication equipment result in the Rx sub-indicator 333 not being activated as expected. The ability to provide a clear dynamic real-time communication traffic overview on both a communication device level and user level is particular advantageously in complex and dynamic communication networks in demanding environments involving a plurality of communication devices and a plurality of users where clear and undistorted communication between the correct people may be crucial.

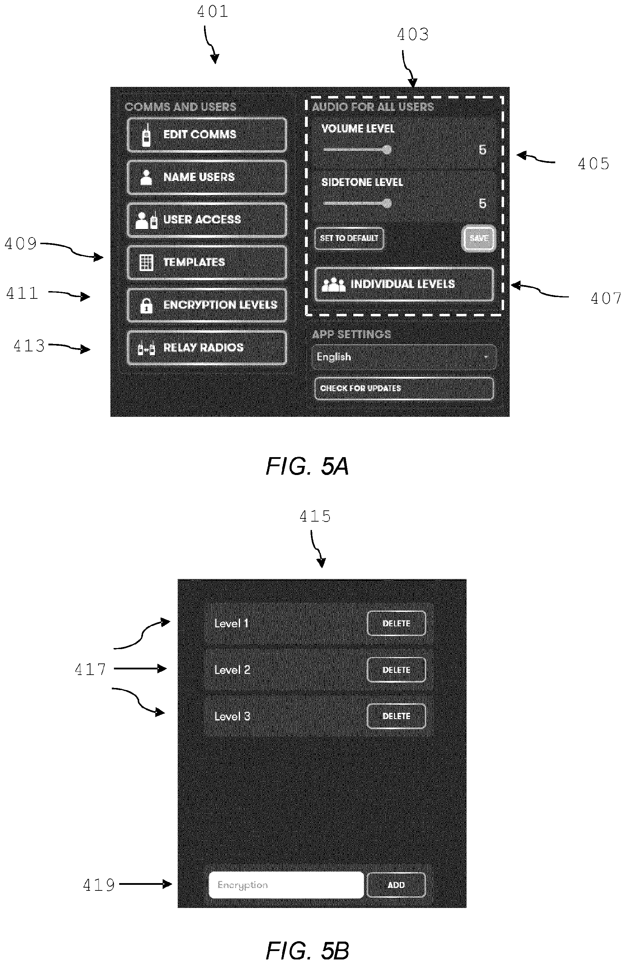

Fig. 5A schematically illustrates an example of a GUI showing a Settings configuration menu 401 available via the control and visualisation module application (see e.g. 221 in Fig. 3) to be displayed on a display screen e.g. of a tablet or the like (see e.g. 213 in Fig. 3). The Settings configuration menu 401 allows an approved user or administrator of the system to configure and/or adjust the communication setup.

The setting configuration menu 401 may provide shortcut buttons to other configuration elements/tiles as previously described in connection with Figs. 4A-C. Additionally, the Settings configuration menu 401 may provide the ability for the user to adjust audio settings 403 of the different sets of personal communication equipment (see e.g. 209a-c in Fig. 3) and auxiliary units (see e.g. 211 in Fig. 3) centrally, thereby overriding and/or adjusting individual settings e.g. or preferably as (otherwise) obtained by the respective cable chips. Both global audio settings 405 may be controlled and adjusted for all connected users/their personal communication equipment (see e.g. 209a-c in Fig. 3) and/or individually specifically tailored for individual users/individual personal communication equipment 407. Examples of audio settings may be general volume control of Rx signals and sidetone level that refers to a small amount of the users own voice which may be looped back into the ear speaker as a user speaks during a Tx transmission. The Settings configuration menu 401 may provide the option to save templates 409 such that a specific configuration may be saved and retrieved quickly at a later point. This is an advantage especially if the communication system (see e.g. 201 in Fig. 3) is being used for multiple different configurations or teams, for example a night/day shift of personnel. It may also be particularly advantageous if the communication system is configured such that if the API connection is lost due to the tablet or the like (see e.g. 213 in Fig. 3) being unplugged, the communication system may default to cable chip configuration settings.

The setting configuration menu 401 may provide the option to manage encryption levels 411 to be associated with a security level category (see e.g. 313 in Fig. 4B) for the connected communication devices.

Fig. 5B schematically illustrates an example of a GUI showing a Security level category manager 415 user interface for controlling and managing security levels 417.

The user interface may be configured to allow the user to generate new security levels categories 419 and remove existing categories and/or security categories may automatically be obtained directly from the connected communication devices via cable chip settings or directly via embedded encryption of voice and data signals from the communication device itself.

The setting configuration menu 401 of Fig. 5A may also provide a shortcut for setting up a re-transmission relationship between different communication devices 413. The re-transmission relationship may be a relaying or crossbanding concept based on the security level categories 417 associates with the different communication devices (see e.g. 207a-d in Fig. 3).

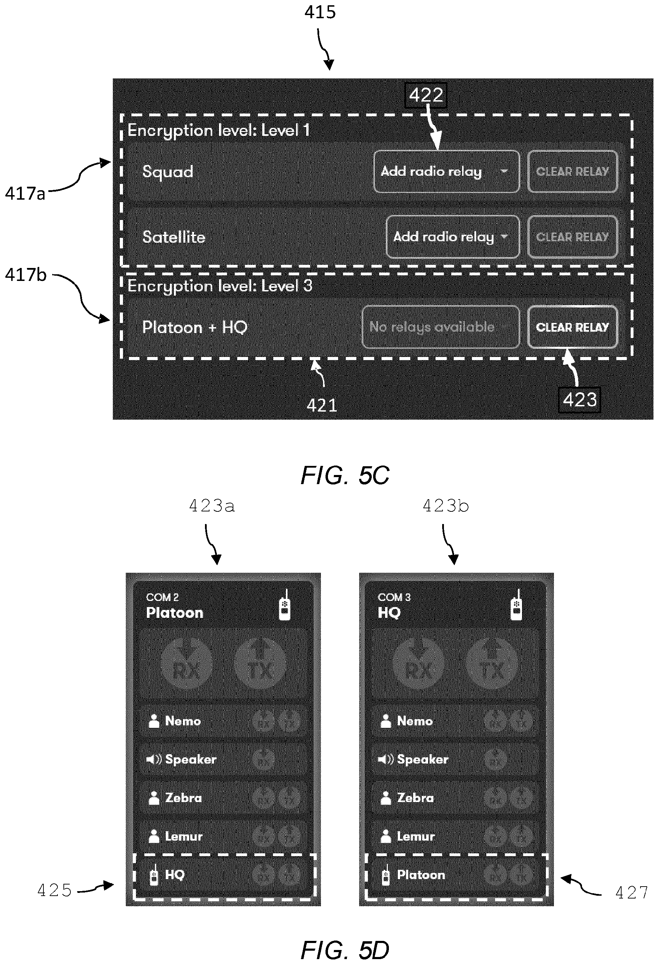

FIG. 5C schematically illustrate an example of a GUI showing a communication relationship manager 421 controlling a relationship between respective communication devices (see e.g. 207a-d in Fig. 3) based on the security levels categories 417 (that may be automatically obtained or generated in the security level category manager page (see 415 in Fig. 5B)) and associated with a specific communication device (see e.g. 207a-d in Fig. 3) via the communication device configuration menu (see e.g. 313 in Fig. 4B). The communication relationship manager 421 may display communication devices grouped according to similar security level category 417a and 417b. In the illustrated example, the communication devices (see e.g. 207a-d in Fig. 3) respectively named or designated "Squad" and "Satellite" (e.g. or preferably as set or controlled by 309 in Fig. 4B) is associated with a similar security level category 417a (being as an example "Level 1") and an option of adding a transmission relationship 422 between the devices may be displayed, such that a user may enable "radio relay" between the communication devices via the user interface. From Fig. 5C the communication devices "Platoon" and "HQ" can be seen to already sharing a relationship link within the similar security level category 417b (being as an example "Level 3"). Similar to establishing relationships between communication devices, transmission connections such as relay may also be cleared via the user interface 423. Accordingly, there is provided a simple and intuitive way of establishing (and removing) relay communication (such radio crossbanding, gatewaying, or patching, etc.) or other communication link between two or more connected communication devices.

Communication relay, such as radio crossbanding, gatewaying or patching, in the context of the present disclosure refer to methods of transmitting a received signal (Rx), received at a first communication device (in the form of a radio or other signal transmitter) from a second communication device, and automatically retransmitting, by the first communication device, the received signal (Rx) as an outgoing signal (Tx) to a third communication device, thereby establishing a communication link between two otherwise unrelated communication devices (the second and third communication devices) where the first communication device thereby function as an automatic "repeater" or has a "repeater function" receiving a signal and automatically transmitting the signal again within the same device. The communication link between the communication devices may be a full relay link as described above or a relay link or partial, where a partial relay link should be understood as a situation where a first communication device is allowed to re-transmit a signal from a second communication device but the second communication may not be allowed to transmit a signal from the first radio.

Such communication relay is particularly advantageous when communication is required to be shared between multiple remote locations, all in radio contact, with an outpost or alike. By enabling crossbanding between two or more communication devices, which is otherwise unrelated, clear and undistorted communication can be established between two or more remote communication centers in real time without the interference and potential errors a person who otherwise need to manually repeat a message.

FIG. 5D schematically illustrates an example of a GUI showing two communication traffic overview GUI elements/tiles 423a, 423b (respectively corresponding to 321b and 321c in Fig. 4D) in accordance with an established communication device transmission relationship as illustrated in Fig. 5C.

The (in the figure) left communication traffic overview element/tile 423a display a communication group associated with a communication device "COM 2" (see e.g. 207b in Fig. 3) named/designated "Platoon" and connected users (see e.g. 209a-c in Fig. 3) named "Nemo", "Zebra", and "Lemur" and an auxiliary unit 211, here as an example in the form of a (e.g. portable) speaker unit 211, having access to the specific communication device (connected to the COM2 connector of the communication hub (see e.g. 101 in Fig. 2 or 203 in Fig. 3)) in accordance with predetermined cable chip settings and/or the communication manager displayed in Fig. 4C. The (in the figure) right communication traffic overview element/tile 423b display a communication group associated with a communication device "COM 3" (connected to the COM3 connector of the communication hub (see e.g. 101 in Fig. 2 or 203 in Fig. 3)); see e.g. 207c in Fig. 3) named/designated "HQ" and connected, via the communication hub, with the same users and auxiliary unit as the COM2 communication device.

The left communication traffic overview element/tile 423a additionally display the communication device "HQ" as a "user" 425 while the right communication traffic overview element/tile 423b display the communication device "Platoon" as a "user" 427 in accordance with the established re-transmission relationship as illustrated in 417b in Fig. 5C whereby communications device "Platoon" automatically will relay incoming signals by re-transmitting it via the "HQ" communication device (and respectively the other way around), activating appropriate indicator(s) in response thereto. This allows for an easy and clear overview of interconnected devices and the communication traffic overview elements/tiles displayed in the communication traffic overview. Communication traffic may be visualised and monitored in relation to interconnected radios.

### Example: Multi-Agency Response to an emergency

In a case of an emergency situation in an urban environment, several parts of an emergency service or response are required to coordinate and share information to bring the situation under control as quickly as possible and prevent as many casualties and further injuries as possible.

The police force, fire brigade, emergency medical services (EMSs), and/or other specialised task forces such as personal trained in dealing with chemical spills and toxic substances may require optimal cooperation to ensure safety as much as possible. As an alternative to using large complex centrally located dispatcher stations as generally known, a preliminary command central may be established in van or other vehicle 205, equipped with a loud speaker 211, using the communication system as shown in Fig. 3, and respective a representatives from the different public safety units may connect (their respective personal communication equipment 209a-c) to the communication hub 203 (which may also be located in the van) so that a first user 209a as an example may be (designated as) the "Fire Captain" bringing a radio 207a for communication with the Central Command of the fire brigade, a second user 209b as an example may be (designated as) the "Police Chief" adding a dedicated radio 207b for communication with a central command of the local police station, and a third user 207c as an example may be (designated as) the "Medical Director" with a radio 209c for communication with a central commend of a suitable Emergency Medical Service (EMS). Public safety personal is otherwise known to operate with radios of a so called P25 or TETRA type, which allows for interoperability between different units and radios of such trunked radio system, however coordination of such interoperability requires a dispatcher in a large dispatcher station to coordinate and crate the necessary communication channels and paths between individual radios. The communication system as shown in Fig. 3 is agnostic to radio communication network and communication types as communication channels dynamically can be configured independently of communication device type, etc.

An Incident Commander ("IC") from the fire brigade may be appointed by the preliminary command central as a central intelligence coordinator at the emergency site while being in communication contact via a communication device 209d (not shown) with the preliminary command centre. Intercommunication between these different units is crucial for effective coordination and resource allocation and for being able to provide a suitable or best possible response to the emergency. The communication system as disclosed herein and as illustrated in Fig. 3 is capable of uniting multiple different communication devices and users on a common communications platform and control and monitor in real-time the communication between the connected devices and furthermore setup and configure all involved (or at least relevant) communication devices to suit or be optimal for an actual need and situation.

Using the control and visualisation module application (see e.g. 221 in Fig. 3), desired communication channels suiting a particular situation or emergency may be established quickly and reliably and also in a versatile manner. FIG. 6 schematically illustrates an example of a GUI showing a communication traffic overview 601 of a preliminary command central generated based on a system configuration, showing (as an example) four GUI communication traffic overview elements/tiles 603a-d.

The first (from left in the figure) communication traffic overview tile 603a show a (first) communication group associated with a (first) communication device (see e.g. 207d in Fig. 3) typically connected to the (as an example) COM1 interface connector of a communication hub (see e.g. 101 and 103a-i in Fig. 2 and 203 in Fig. 3) and in contact with the designated Incident Commander "IC" deployed in the emergency situation. As the Incident Commander "IC" (as an example) is appointed from the Fire brigade, the Fire Captain may directly be associated with the respective communication channel and the radio in contact with the central command of the fire brigade "CC Fire" (see e.g. 207b in Fig. 3) is relayed with incident commander "IC" radio (so that communication on the IC communication channel is relayed to the CC Fire communication channel as well). The auxiliary unit/loudspeaker unit (see e.g. 211 in Fig. 3) may additionally form part (and in the example is) of the IC communication group, as it is located inside the van, thereby allowing the "Police Chief" and the "Medical Director" (also or at least when physically present in the van) to follow the reports from the Incident Commander.

The second communication traffic overview element/tile 603b shows a (second) communication group associated with a (second) communication device (see e.g. 207b in Fig. 3) connected to the (as an example) COM2 interface connector of the communication hub (see e.g. 101 and 103a-i in Fig. 2 and 203 in Fig. 3) and in contact with the Central Command of the Fire brigade "CC fire", the Fire Captain directly (see e.g. 209b in Fig. 3), the incident commander "IC" via radio relay and the loud speaker 211 whereby messages from the "CC fire" may be heard by the "Police Chief' and the "Medical Director" (when) located in the van.

The third communication traffic overview element/tile 603c show a (third) communication group associated with a (third) communication device (see e.g. 207c in Fig. 3) connected to the (as an example) COM3 interface connector of the communication hub (see e.g. 101 and 103a-i in Fig. 2 and 203 in Fig. 3) and in contact with the central command at the local police station "CC police", the Police Chief directly (see e.g. 209c in Fig. 3), and the loud speaker 211 so messages from the "CC police" may be heard by the "Fire Captain" and the "Medical Director" (when) located in the van.

The forth communication traffic overview tile 603d, show a (fourth) communication group associated with a (fourth) communication device (see e.g. 207d in Fig. 3) connected to the (as an example) COM4 interface connector of the communication hub (see e.g. 101 and 103a-i in Fig. 2 and 203 in Fig. 3) and in contact with the Central Command Emergency Medical Services "CC EMS", the EMS Director directly (see e.g. 209a in Fig. 3), and the loud speaker 211 so that messages from the "CC EMS" may be heard by the "Fire Captain" and the "CC police" (when) located in the van.

This communication setup may simply and reliably be enabled via the control and visualisation module application (see e.g. 221 in Fig. 3), and more specifically e.g. the communication configuration menu as shown in Fig. 4C thereby enabling simple setup and configuration of a versatile communication system as well as clear and undistorted communication in a demanding situation and environment so that individual police officers may provide crucial updates via their respective communication systems, such as identifying potential hazards and coordinate with both individuals and/or vehicles from the fire brigade to secure access routes for ambulances and ensure the safety of EMS personnel. The fire brigade may require communicating with the EMS to identify areas that need immediate medical attention or evacuation. They may also transmit information about structural integrity, guiding for example medical teams away from unstable buildings and debris. The EMS may communicate with both police and fire brigade to request additional resources as needed.

Ultimately, it is the ability to seamless integrate, setup/configure, control, and monitor communication between these disparate units - the police force, the fire brigade and the EMS that allows for or at least contribute to a comprehensive response to a specific emergency situation. Their collective efforts and the support of the communication system not only potentially minimise loss of life and property damage but also demonstrate the significance of interagency cooperation in safeguarding public safety during times of crisis and emergencies.

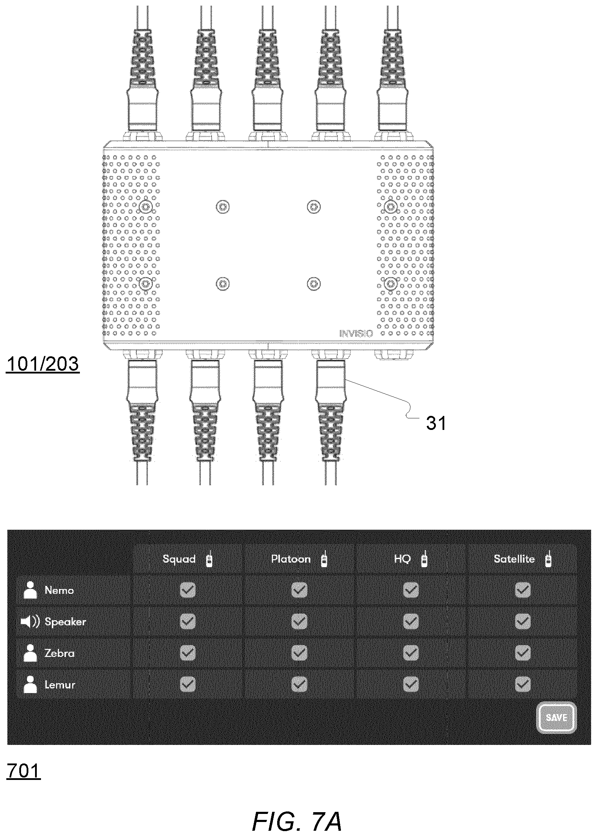

FIGS. 7A-C schematically illustrate examples of different states of a digital GUI showing how the GUI dynamically changes as different types of communication devices are removed/disconnected.

Illustrated in Figs. 7A-C is a communication hub 101, 203 as disclosed herein and a GUI 701 illustrating a plurality of presently detachably connected, via respective connectors 31, communication devices (see e.g. 207a-d in Fig. 3), presently detachably connected, via respective connectors 31, users (see e.g. 209a-c) as connected by their respective personal communication equipment (see e.g. 13 and 209a-c in Figs. 1A and 3, respectively), and presently detachably connected, via respective connectors 31, auxiliary units or devices (see e.g. 211 in Fig. 3), here as an example in the form of a portable loudspeaker. Illustrated is also a connector (in the figure located right and upper-most) connected, via a respective connector 31, for power and/or data (see e.g. 103j and 217 in Figs. 2 and 3, respectively). In the illustrated example in Fig. 7A, four communication devices and four users (via their respective personal communication equipment) are connected to the hub 101, 203. The communication devices are respectively connected to COM ports, in the illustrated examples COM1 to COM4 (in the figure the four, from the left, upper connectors), of the hub 101, 203 and the personal communication equipment of the users and the auxiliary device are respectively connected to interface connectors (in the figure the four, from the left, lower connectors) (see e.g. 103a-d in Fig. 2) of the hub 101, 203.

The GUI 701 in Fig. 7A illustrates that the four communication devices (designated "Squad", "Platoon", "HQ", and "Satellite") and the three users and the auxiliary device (designated "Nemo", "Speaker", "Zebra", and "Lemur") are connected and the GUI allows for configuration (e.g. or preferably corresponding to the communication configuration menu of Fig. 4C) between the devices as disclosed herein.

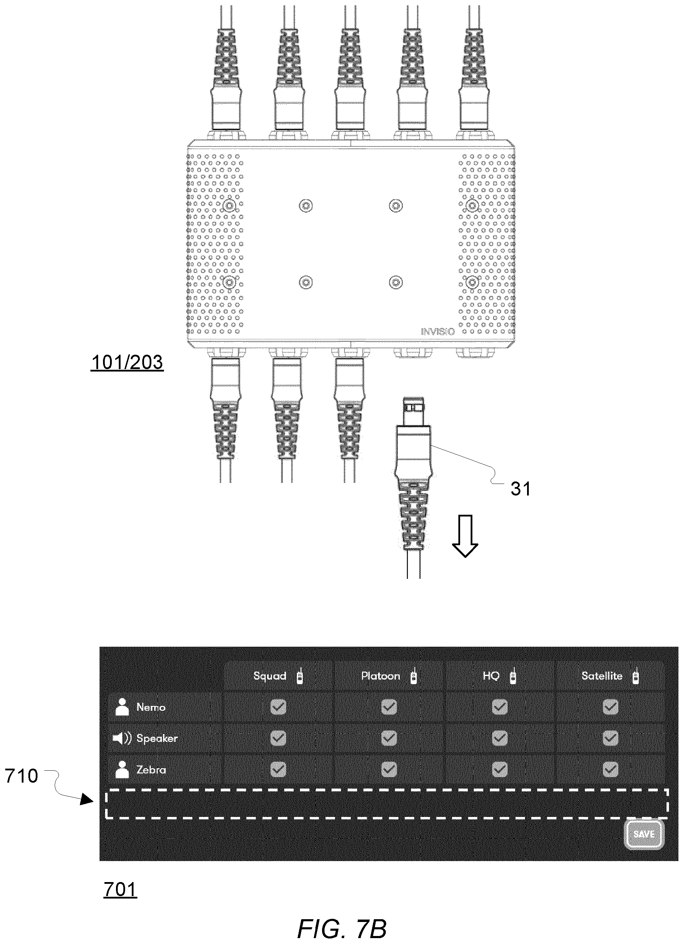

In Fig. 7B, one connector 31 is removed as indicated by the arrow where the connector is a connector of the personal communication equipment of a particular user (in this example of the user designated "Lemur") and as illustrated, the GUI 701 is dynamically updated to reflect the new situation and no longer show any data, information, or selections relating to the user designated "Lemur" (as represented by 710) whereby it is no longer possible in the GUI 701 to select or control which communication devices user "Lemur" should have access to.

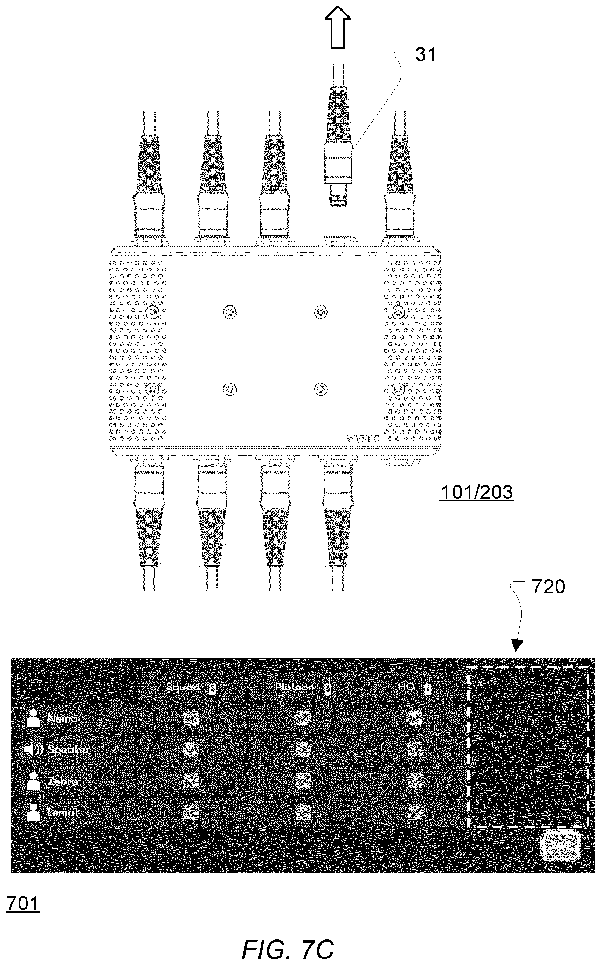

In Fig. 7C, another connector 31 is removed (compared to the situation of Fig. 7A) as indicated by the arrow where the connector is a connector of a particular communication device (in this example the communication device designated "Satellite") and as illustrated, the GUI 701 is dynamically updated to reflect the new situation and no longer show any data, information, or selections relating to the communication device designated "Satellite" (as represented by 720) whereby it is no longer possible in the GUI 701 to select or control that the users and auxiliary device should have access to the communication device "Satellite".

Accordingly, the GUI 701 is updated to dynamically and ongoingly and e.g. or preferably in real-time reflect a current actual situation of which devices (and devices of users) are connected to the hub 101, 203. It is noted, that the GUI 701 may be updated in other ways, e.g. scaling the displayed GUI elements for optimal size on a display or similar given the currently/updated displayed GUI elements.

Some preferred embodiments have been shown in the foregoing, but it should be stressed that the invention is not limited to these, but may be embodied in other ways within the subject matter defined in the following claims.

It should be emphasized that the term "comprises/comprising" when used in this specification is taken to specify the presence of stated features, elements, steps or components but does not preclude the presence or addition of one or more other features, elements, steps, components or groups thereof.

In the claims enumerating several features, some or all of these features may be embodied by one and the same element, component or item. The mere fact that certain measures are recited in mutually different dependent claims or described in different embodiments does not indicate that a combination of these measures cannot be used to advantage.

In the claims, any reference signs placed between parentheses shall not be constructed as limiting the claim. The word "comprising" does not exclude the presence of elements or steps other than those listed in a claim. The word "a" or "an" preceding an element does not exclude the presence of a plurality of such elements.

The mere fact that certain measures are recited in mutually different dependent claims does not indicate that a combination of these measures cannot be used to an advantage.

It will be apparent to a person skilled in the art that the various embodiments of the invention as disclosed and/or elements thereof can be combined without departing from the scope of the invention as defined in the claims.

## Claims

1. A controllable tactical communication system (201) to be used in a demanding environment, the controllable tactical communication system (201) comprising:
- a communication hub (101, 203) comprising
∘ a number, e.g. a plurality, of first connectors (103f-i), each first connector (103f-i) configured to connect to a communication device (207a-d), and
∘ comprising a number, e.g. a plurality, of second connectors (103a-e), each second connector (103a-e) configured to connect to a personal user device (3, 5) of a set of personal communication equipment (13, 209a-c),
- one or more communication devices (207a-d), each configured to receive and transmit a communication signal from and/or to a remote source and each being connected to a respective first connector (103f-i) of the communication hub (101, 203),
- one or more personal user devices (3, 5) of respective sets of personal communication equipment (209a-c), each set of personal communication equipment (209a-c) representing or being associated with a respective specific user (1, 209a-c) and each personal user devices (3, 5) being connected to a respective second connector (103a-d) of the communication hub (101, 203), and
- one or more processing elements and/or devices (113, 227, 213, 221) configured to
∘ obtain first data representing or associated with the communication device(s) (207a-d) that presently is connected to the communication hub (101, 203), and/or
∘ obtain second data representing or associated with the specific user(s) (1, 209a-c) represented or being associated with personal user device(s) (3, 5) that presently is connected to the communication hub (101, 203),
wherein the one or more processing elements and/or devices (113, 227, 213, 221) is/are further configured to
∘ generate and present one or more graphical user interface elements (231, 233, 303a-c, 307, 309, 311, 313, 315, 317, 319, 321a-f, 323, 325, 327, 329, 331, 333, 403, 404, 407, 415, 417, 417a-b, 421, 423a-b, 425, 427, 603a-d, 601, 701) in response to the first and/or second data.

2. The system (201) according to claim 1, wherein the one or more graphical user interface elements comprising
∘ a main indicator (323, 327, 331) for each respective presently connected communication device (207a-d), the main indicator(s) (323, 327, 331) indicating a current actual status of communication of the respective communication device (207a-d), and/or
∘ a sub-indicator (325, 329, 333) for each user (1, 209a-c), the sub-indicator(s) (325, 329, 333) indicating current actual status of communication of the respective personal user device(s) (3, 5) representing or being associated with the respective user (1, 209a-c).

3. The system (201) according to claim 2, wherein the main indicator(s) (323, 327, 331) is/are generated in response to the first data and/or the sub-indicator(s) (325, 329, 333) is/are generated in response to the second data.

4. The system (201) according to claim 2 or 3, wherein
- the current actual status of communication of the respective communication device(s) (207a-d) comprises a transmit indicator (327) when the current actual status of communication of the respective communication device(s) (207a-d) comprises transmitting a communication signal and a receive indicator (331) when the current actual status of communication of the respective communication device(s) (207a-d) comprises receiving a communication signal, and/or
- the current actual status of communication of the respective personal user device(s) (3, 5) comprises a transmit sub-indicator (329) when the current actual status of communication of the respective personal user device(s) (3, 5) comprises transmitting a communication signal and a receive sub-indicator (333) when the current actual status of communication of the respective personal user device(s) (3, 5) comprises receiving a communication signal.

5. The system (201) according to any one of the preceding claims, wherein the one or more processing elements and/or devices (113, 227, 213, 221) is/are further configured to control communication of the tactical communication system (201) by
- generating and presenting one or more graphical user interface elements comprising the communication device(s) (207a-d) according to the first data;
- generating and presenting one or more graphical user interface elements comprising the specific user(s) (1, 209a-c) according to the second data;
- generating and presenting one or more graphical user interface elements comprising a user selectable selection element for each combination/pair, or a subset thereof, of communication device (207a-d) and specific user (1, 209a-c),
- registering which user selectable selection elements a user selects resulting in a combination/pair set of selected and registered communication device (207a-d) and specific user (1, 209a-c) combinations/pairs, and only allow communication in the controllable tactical communication system (201) of the communication device(s) (207a-d) and specific user(s) (1, 209a-c) according to the resulting combination/pair set.

6. The system (201) according to claim 5,
- wherein the communication device(s) (207a-d) and the personal user device(s) (3, 5) that are connected to the communication hub (101, 203) respectively is connected via a respective connector (31), where each connector (31), or at least one or some thereof, comprises an embedded memory (33) in the respective connector (31) or a in a cable attached thereto, where the respective embedded memory (33) comprises data representing configuration settings for the device (207a-d, 5) that connector (31) is for, and
- wherein the one or more processing elements and/or devices (113, 227, 213, 221) is/are configured to only, at least initially, generate and present selection elements for communication device (207a-d) and specific user (1, 209a-c) combination(s)/pair(s) as allowed by or in accordance to the data representing configuration settings of the connected devices (207a-d, 5).

7. The system (201) according to claim 5 or 6, wherein the one or more processing elements and/or devices (113, 227, 213, 221) is/are further configured to
- generate and present a graphical user interface element for each connected communication device (207a-d) of the resulting combination/pair set, the respective graphical user interface element displaying information or data of
∘ the communication device (207a-d) in question,
∘ each specific user (1, 209a-c) that, according to the resulting combination/pair set, has been selected to be allowed to communicate with or via the communication device (207a-d) in question resulting in a set of allowed specific user(s) (1, 209a-c), and
∘ a main indicator (323, 327, 331) for the communication device (207a-d) in question and/or a sub-indicator (325, 329, 333) for each specific user (1, 209a-c) of the set of allowed specific user(s) (1, 209a-c).

8. The system (201) according to any one of the preceding claims, wherein the one or more processing elements and/or devices (113, 227, 213, 221) is/are further configured to
- generate and present one or more graphical user interface elements (415, 417, 417a, 417b, 419) comprising a user selectable security selection element for each connected communication device (207a-d), and
- registering which user selectable security selection element a user selects or chooses and set a security level accordingly, e.g. including setting an encryption level, for the communication device (207a-d) in question,
wherein the controllable tactical communication system (201) is configured to allow and/or disallow one or more predetermined functionalities involving the communication device (207a-d) in the controllable tactical communication system (201) in response to the set security level.

9. The system (201) according to any one of the preceding claims, wherein the one or more processing elements and/or devices (113, 227, 213, 221) is/are further configured to
- generate and present one or more graphical user interface elements (421) comprising a user selectable relay selection element for each connected communication device (207a-d), and
- registering which user selectable relay selection element a user selects or chooses and set a relay functionality for the communication device (207a-d) in question accordingly.

10. The system (201) according to any one of the preceding claims, wherein
- the first data is dynamically updated accordingly when a communication device (207a-d) is disconnected from communication hub (101, 203) and/or
- the second data is dynamically updated when a personal user device(s) (3, 5) is disconnected from communication hub (101, 203) by removing the specific user (1, 209a-c), represented or being associated with removed personal user device (2, 5), from the second data.

11. The system (201) according to any one of the preceding claims, wherein the communication hub (101, 203)
- is portable and/or wearable, or
- is fixed or installed in a vehicle (205) or the like.

12. The system (201) according to any one of the preceding claims, wherein
- the controllable tactical communication system (201) further comprises a, e.g. or preferably portable and/or wearable, processing device (213) e.g. a tablet (213) or the like, and
- the communication hub (101, 203) comprises at least one third connector (217) configured to transmit and/or receive a data signal, wherein the processing device (213) is connected to the communication hub (101, 203) via the third connector (217),
wherein the processing device (213) comprises a display and is configured to
- generate and present the one or more graphical user interface elements (231, 233, 303a-c, 307, 309, 311, 313, 315, 317, 319, 321a-f, 323, 325, 327, 329, 331, 333, 403, 404, 407, 415, 417, 417a-b, 421, 423a-b, 425, 427, 603a-d, 601, 701), and
- receive input from a user operating the processing device (213).

13. The system (201) according to any one of the preceding claims, wherein
- the set of personal communication equipment (13, 209a-c) of a personal user device (3, 5) comprises a hearing protection headset (3) and one or more of: a push-to-talk (PTT) control unit (5), a hearing protection device (3), one or more communication devices (9, 11), one or more radios (9, 11), a radio of a first type (9), a radio of a second type (11), one or more end-user-devices (EUD) (7),
- at least one, some, or all of the connected communication device(s) (207a-d) and/or the connected personal user device(s) (3, 5) are releasable or detachable connected with the communication hub (101, 203),
- at least one, some, or all of the connected communication device(s) (207a-d) and/or the connected personal user device(s) (3, 5) are wirelessly connected with the communication hub (101, 203), and/or
- the communication hub (101, 203) is powered by an off-grid power supply.

14. The system (201) according to any one of the preceding claims, wherein
- the controllable tactical communication system (201) further comprises one or more auxiliary devices (211),
- the second data further represent one or more of the auxiliary devices (211) that presently is connected to the communication hub (101, 203) via a respective second connector (103a-d) of the communication hub (101, 203), and
- the one or more processing elements and/or devices (113, 227, 213, 221) is/are further configured to
- generate and present one or more graphical user interface elements in response to the first and/or second data, the one or more graphical user interface elements comprising
∘ a further sub-indicator (325, 329, 333) for each connected auxiliary devices (211), the further sub-indicator(s) (325, 329, 333) indicating current actual status of communication of the respective connected auxiliary device(s) (211).

15. A method of controlling a controllable tactical communication system (201) to be used in a demanding environment, the method comprising:
- connecting one or more communication devices (207a-d), each configured to receive and transmit a communication signal from and/or to a remote source, to a respective first connector (103f-i) of a communication hub (101, 203),
- connecting one or more personal user devices (3, 5) of respective sets of personal communication equipment (209a-c) to a respective second connector (103a-d) of the communication hub (101, 203), each set of personal communication equipment (209a-c) representing or being associated with a respective specific user (1, 209a-c), and
- obtaining, by one or more processing elements and/or devices (113, 227, 213, 221),
∘ first data, the first data representing or associated with the communication device(s) (207a-d) that presently is connected to the communication hub (101, 203), and/or
∘ second data, the second data representing or associated with the specific user(s) (1, 209a-c) represented or being associated with personal user device(s) (3, 5) that presently is connected to the communication hub (101, 203),
wherein the method further
- generates and presents, by the one or more processing elements and/or devices (113, 227, 213, 221), one or more graphical user interface elements (231, 233, 303a-c, 307, 309, 311, 313, 315, 317, 319, 321a-f, 323, 325, 327, 329, 331, 333, 403, 404, 407, 415, 417, 417a-b, 421, 423a-b, 425, 427, 603a-d, 601, 701) in response to the first and/or second data.
